(19)

**Europäisches Patentamt**
**European Patent Office**
**Office européen des brevets**

(11) **EP 4 513 235 A1**

(12) **EUROPEAN PATENT APPLICATION**

(43) Date of publication:
26.02.2025 Bulletin 2025/09

(21) Application number: 23192455.6

(22) Date of filing: 21.08.2023

(51) International Patent Classification (IPC):
$G01S\ 13/56^{(2006.01)}$    $G01S\ 7/41^{(2006.01)}$
$G01S\ 7/288^{(2006.01)}$    $G01S\ 7/292^{(2006.01)}$
$G01S\ 7/35^{(2006.01)}$    $G01S\ 13/34^{(2006.01)}$
$G01S\ 13/52^{(2006.01)}$    $G01S\ 13/58^{(2006.01)}$
$G01S\ 13/524^{(2006.01)}$    $G01S\ 13/526^{(2006.01)}$

(52) Cooperative Patent Classification (CPC):
G01S 13/343; G01S 7/2886; G01S 7/2922;
G01S 7/2926; G01S 7/2927; G01S 7/354;
G01S 7/358; G01S 7/414; G01S 7/415;
G01S 13/52; G01S 13/5244; G01S 13/5246;
G01S 13/526; G01S 13/56; G01S 13/58

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Infineon Technologies AG**
**85579 Neubiberg (DE)**

(72) Inventors:
• **ENGLISCH, Daniel**
 **81671 Echarding (DE)**
• **WILL, Christoph Jürgen**
 **81673 München (DE)**

(74) Representative: **2SPL Patentanwälte PartG mbB**
 **Landaubogen 3**
 **81373 München (DE)**

Remarks:
Amended claims in accordance with Rule 137(2) EPC.

(54) **APPARATUS, RADAR SYSTEM, AND METHOD FOR DETECTING A TARGET MOTION**

(57) The present disclosure relates to an apparatus for detecting a target motion in a field of view of a radar sensor. The apparatus comprises processing circuitry configured to obtain a magnitude of a frequency spectrum of a receive signal of the radar sensor. The frequency spectrum comprises a first portion and a second portion within a frequency bandwidth divided into bins. The first and second portions are symmetrically positioned with respect to a center frequency. For at least one bin in the first portion, the processing circuitry is configured to determine a bin threshold based on the magnitude of the frequency spectrum within one or more bins in the first portion. For at least one bin in the second portion, the processing circuitry is configured to determine a bin threshold based on the magnitude of the frequency spectrum within one or more bins in the first portion. Furthermore, the processing circuitry is configured to detect the target motion in response to the magnitude of the frequency spectrum exceeding the bin threshold in at least one bin within the frequency bandwidth.

Fig. 1B

EP 4 513 235 A1

## Description

### Field

The present disclosure relates to radar data processing. In particular, examples relate to an apparatus, a radar system, a method, and a program for detecting a target motion in a field of view of a radar sensor.

### Background

When detecting a motion of a target using radar sensors, various methods have been used for differentiating a signal with information from noise. For detection, a threshold may be implemented to determine whether the signal contains a pattern of interest or simply a random pattern. It is a fundamental problem when using radar sensors to find a proper threshold level that maximizes correct detections and minimizes false detections, which may save power consumption. A radar system should also be able to detect minor motions, while preventing disturbances (e.g., fans, curtains, blinds, vibrations from loudspeakers, bushes, trees, rain, snow, etc.) or interferences (i.e. other radar systems using the same or a neighboring RF frequency) from triggering false alarms, which may lead to an increase in power consumption. Current solutions using thresholds have proven inadequate, particularly for detecting a motion of a target.

Thus, there is a demand for radar data processing that implements an appropriate threshold to a signal spectrum.

### Summary

This demand is satisfied by the subject matter of the independent claims. Further beneficial embodiments are given by the dependent claims.

According to a first aspect, the present disclosure relates to an apparatus for detecting a target motion in a field of view of a radar sensor. The apparatus comprises processing circuitry configured to obtain a magnitude of a frequency spectrum of a receive signal of the radar sensor. The frequency spectrum comprises a first portion and a second portion within a frequency bandwidth divided into bins. The first and second portions are symmetrically positioned with respect to a center frequency. For at least one bin in the first portion, the processing circuitry is configured to determine a bin threshold based on the magnitude of the frequency spectrum within one or more bins in the second portion. For at least one bin in the second portion, the processing circuitry is configured to determine a bin threshold based on the magnitude of the frequency spectrum within one or more bins in the first portion. Furthermore, the processing circuitry is configured to detect the target motion in response to the magnitude of the frequency spectrum exceeding the bin threshold in at least one bin within the frequency bandwidth.

According to a second aspect, the present disclosure relates to a radar system comprising an apparatus as described herein and a radar sensor configured to generate the receive signal.

According to a third aspect, the present disclosure relates to a method for detecting a target motion in a field of view of a radar sensor. The method comprises obtaining a magnitude of a frequency spectrum of a receive signal of the radar sensor. The frequency spectrum comprises a first portion and a second portion within a frequency bandwidth divided into bins. The first and second portions are symmetrically positioned with respect to a center frequency. The method further comprises, for at least one bin in the first portion, determining a bin threshold based on the magnitude of the frequency spectrum within one or more bins in the second portion. The method further comprises, for at least one bin in the second portion, determining a bin threshold based on the magnitude of the frequency spectrum within one or more bins in the first portion. Furthermore, the method comprises detecting the target motion in response to the magnitude of the frequency spectrum exceeding the bin threshold in at least one bin within the frequency bandwidth.

According to a fourth aspect, the present disclosure relates to a program having a program code for performing a method as described herein when the program is executed on a processor or programmable hardware.

### Brief description of the Figures

Some examples of apparatuses and/or methods will be described in the following by way of example only, and with reference to the accompanying figures, in which

Fig. 1A   schematically illustrates an exemplary apparatus for detecting a target motion in a field of view of a radar sensor;

Fig. 1B   schematically illustrates an exemplary radar system for detecting a target motion in a field of view of a radar sensor;

Fig. 2 depicts an exemplary frequency spectrum comprising a first and second portion with a magnitude distributed over an exemplary bandwidth and centered on an exemplary center frequency;

Fig. 3 depicts an exemplary frequency spectrum with a respective bin threshold for each of a plurality of bins;

Fig. 4 depicts an exemplary frequency spectrum with two frequency bins depicted with a respective bin threshold based on a frequency bin in an opposing portion;

Fig. 5 depicts an exemplary frequency spectrum with one of the bin thresholds being exceeded by the magnitude within the respective bin;

Fig. 6 depicts an exemplary frequency spectrum with one frequency bin depicted with a bin threshold based on the magnitude within five other frequency bins in an opposing portion;

Fig. 7A depicts an exemplary frequency spectrum with one frequency bin depicted with a bin threshold based on the magnitude within four other frequency bins in an opposing portion;

Fig. 7B depicts an exemplary frequency spectrum with one frequency bin depicted with a bin threshold based on the magnitude within three other frequency bins in an opposing portion;

Fig. 8 depicts an exemplary frequency spectrum with a plurality of frequency bins excluded from having a respective bin threshold determined;

Fig. 9A depicts an exemplary frequency spectrum with a locally spiked magnitude within a frequency bin;

Fig. 9B depicts an exemplary frequency spectrum with a corrected magnitude within the frequency bin of a previously spiked magnitude;

Fig. 10A depicts a first time frame and a corresponding frequency spectrum with a bin threshold for the first time frame;

Fig. 10B depicts a following time frame and a corresponding frequency spectrum with a bin threshold for the following time frame; and

Fig. 11 provides a flow chart of an exemplary method for detecting a target motion in a field of view of a radar sensor.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

**The use of thresholds** in radar data processing is common for determining a target motion within a field of view of a radar sensor, e.g., a Doppler radar system. Thresholds may be implemented according to the magnitude of a frequency spectrum, particularly within various frequency components (e.g., frequency bins). Each frequency bin may be associated with a Doppler velocity, a velocity of a moving target as measured by a radar system using the Doppler effect. If such a target is within the field of view of the radar sensor, its motion may cause a change in a reflected wave in comparison to an originally emitted wave of the radar system, which may affect the value of the magnitude within various frequency bins according to structured patterns.

The target motion may be detected by analysis of the magnitude of the frequency spectrum. In particular, a difference can be found between the magnitudes of frequency spectra corresponding to a field of view of an arbitrary scene with and without the target motion. How thresholds in the frequency spectrum are implemented may determine the accuracy of such detection. Respective bin thresholds may be implemented for the bins in the frequency spectrum, depending on a type of motion that the target may usually exhibit. For example, a fixed threshold may be implemented for respective bins, and a detection may be made based on whether the magnitude of the frequency spectrum exceeds the fixed threshold within any of the bins. However, this may lead to a non-optimized sensitivity for certain conditions, which may lead to false alarms due to a disturbance or interference within the receive signal.

One common implementation that may better adapt to various conditions is a CFAR (Constant-False-Alarm-Rate)-algorithm, meant to maintain a constant rate of false alarms. Common CFAR-algorithms check the magnitude within the frequency bins in a close proximity of a bin-under-test to find a proper threshold. Thus, CFAR-algorithms may provide an adaptive threshold for respective frequency bins for each newly generated frequency spectrum, which may be effective for a varying noise level and in various environments. However, they may still not be suitable to detect motions caused by specific targets and may not adequately address the presence of disturbing or interfering objects in the background of the targets.

A specific target may generally exhibit certain types of motion, which may cause predictable or structured changes in the magnitude of a frequency spectrum. For example, the magnitude of a frequency spectrum based on a field of view including a motion of a human being may generally be asymmetric within a particular bandwidth, whereas a field of view lacking such motion or anything similar, may generally be symmetric, even if disturbing or interfering objects are also present. CFAR algorithms and other adaptive algorithms do not make use of such properties, but trigger a detection independent of whether the magnitude of the frequency spectrum is symmetric or asymmetric. In the following, a means for exploiting such symmetric and asymmetric properties for target motion detection will be presented.

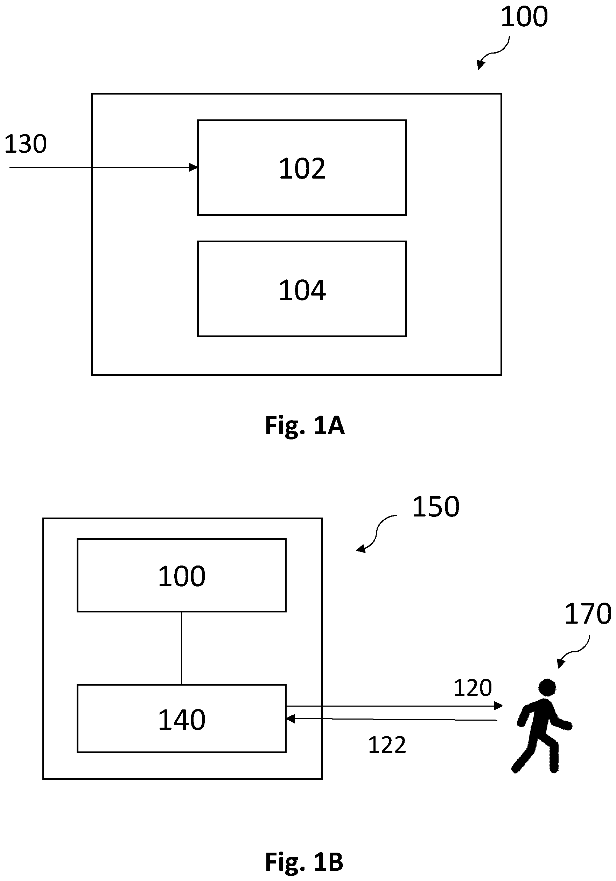

**Fig. 1A** schematically illustrates a block diagram of an apparatus 100. The apparatus 100 is to be considered in the context of a radar system 150, as explained below with reference to **Fig. 1B.** The radar system 150 comprises a radar sensor 140 and the apparatus 100. The apparatus 100 is configured for detecting a motion of a target 170 in a field of view (a scene) of the radar sensor 140. Although the apparatus 100 and the radar sensor 140 are depicted as separate blocks, in other examples, the apparatus 100 may in part or in entirety be included in the radar sensor 140. In other words, the apparatus 100 may be external to or (e.g., partially or fully) integrated into the radar sensor 140. For instance, the apparatus 100 may be distributed between the radar sensor 140 and a location external to the radar sensor 140.

The apparatus 100 comprises processing circuitry 102 and, optionally, interface circuitry 104. The processing circuitry 102 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 102 may optionally be coupled to, e.g., read only memory (ROM) for storing software, random access memory (RAM) and/or non-volatile memory.

In case interface circuitry 104 is present, the interface circuitry 104 may be communicatively coupled (e.g., via a wired or wireless connection) to the processing circuitry 102, e.g., for data exchange between the interface circuitry 104 and the processing circuitry 102. The interface circuitry 104 may be any device or means for communicating or exchanging data. In case the apparatus 100 comprises the interface circuitry 104, the interface circuitry 104 may be configured to receive data indicating a receive signal 130 of the radar sensor 140. For instance, the interface circuitry 104 may be communicatively coupled to the radar sensor 140 or to a storage device storing the data. The interface circuitry 104 may receive the data indicating the receive signal 130, e.g., via a wired or wireless coupling to the radar sensor 140 or the storage device.

Depending on the specific implementation, the apparatus 100 may dispense with the interface circuitry 104. In some implementations, the apparatus 100 may be configured to receive the receive signal 130 of the radar sensor 140 by means of the processing circuitry 102, as depicted in Fig. 1A, while in other implementations, the apparatus 100 may be configured to receive the receive signal 130 by means of the interface circuitry 104. For example, the processing circuitry 102 may determine the data indicating the receive signal 130. The processing circuitry 102 may also be integrated into the radar sensor 140. In case the apparatus 100 is integrated in the radar sensor 140, the processing circuitry 102 and the radar sensor 140 may be jointly integrated (embedded) in a single semiconductor chip, or in more than one semi-conductor chip. In case the apparatus 100 is only partially included in the radar sensor 140, the radar system 150 may perform distributed processing carrying out respective parts of processing steps.

The processing circuitry 102 may also partially determine the data indicating the receive signal 130. For instance, the processing circuitry 102 may determine a first part of the data, whereas at least one external processing circuitry may determine at least a second part of the data. The processing circuitry 102 and the external processing circuitry may, e.g., be connected within a distributed computing environment for jointly determining the data indicating the receive signal 130. In this case, the processing circuitry 102 may either be integrated into the radar sensor 140 or may be external to the radar sensor 140. The processing circuitry 102 may receive the second part of the data, e.g., via an interface to the external processing circuitry such as interface circuitry 104, and further process the first and the second part of the data.

The processing circuitry 102 may be partially integrated into the radar sensor 140 and partially external to the radar sensor 140. In such cases, the interface circuitry 104 is optional. The processing circuitry 102 may, for instance, comprise a first part (first processing circuitry) which is integrated into the radar sensor 140 and a second part (second processing circuitry) which is external to the radar sensor 140. In this case, the determination of the data and/or further processing may be performed by the first and second part of the processing circuitry 102 in a distributed manner.

The radar sensor 140 may be any device that uses radio waves to, e.g., detect and locate objects. The radar sensor 140 may be configured to emit a radio frequency signal 120 (Tx signal), into the field of view of the radar sensor 140 and generate the receive signal 130 based on a reflection 122 (echo; Rx signal), of the radio frequency signal 120, as depicted in Fig. 1B.

The radio frequency signal 120 is depicted to reflect from a target 170. The target 170 is depicted to be a human being in motion, but may be specified to be any similarly moving object (e.g., human being or animal that exhibits similar motions, among others). The motion of the target 170 may be a macro motion, or larger-scale motion. More specifically macro motions may refer to significant changes in position over a given time scale by the target 170, which may be caused by walking or running, etc. Other macro motions may be bodily movements causing a significant change in position for certain body parts. Macro motions may be significant and detectable compared to less detectable minor motions involving less significant changes in position in the same given time scale.

The receive signal 130 may be any type of signal that is generated in a receiver of the radar sensor 140. The receive signal 130 may be an intermediate frequency, IF, signal, which may e.g., be created by mixing the reflection 122 with a local oscillator signal at a specific frequency. The processing circuitry 102 may determine data indicating the receive signal 130 by, e.g., sampling the receive signal 130 and perform further processing of the data. The processing circuitry 102 may optionally modify the sampled receive signal in a pre-processing step, e.g., for noise-reduction, DC-removal (direct current) or alike. For instance, the apparatus 100 may comprise memory configured to store such generated data.

The radar sensor 140 or an external device coupled to the radar sensor 140 may generate the data (e.g., IF signal) indicating the receive signal 130 based on the received reflection 122 of the radio frequency signal 120 by, e.g., sampling the received reflection 122 by means of an analog-to-digital converter (ADC). For instance, the radar sensor 140 may mix the received reflection 122 with a replica of the emitted signal 120 using a mixer to produce an IF signal $xIF(t)$ (e.g., a Doppler or beat signal). The radar sensor 140 may comprise one or more antennas to receive the reflected signal (reflection) 122. Furthermore, the radar sensor 140 may comprise an amplifier to receive multiple reflected signals from its antennas. The IF signal $xIF(t)$ may be filtered with a low-pass filter (LPF) and then sampled by the ADC for generating a discrete form of time-domain data.

In some embodiments, the ADC may advantageously sample the filtered beat signals $xout(t)$ with a sampling frequency for generating a sampling bandwidth, such that it is greater than or equal to the bandwidth of the receive signal 130 as received by the receiving antennas. As such, the sampling frequency may, in some embodiments, be twice the highest frequency (or bandwidth) of the receive signal 130 in order to achieve such a sampling bandwidth. This would comply with the Nyquist-Shannon theorem, which states that the sampling frequency should be at least twice the bandwidth of a signal to avoid distortion. Distortion may occur, for example, due to aliasing, where different frequency components in the radar signal become indistinguishable or distorted. The Nyquist-Shannon theorem assumes that the signal being sampled is band-limited, without frequency components beyond a maximum frequency.

The radar sensor 140 may, for instance, be a Doppler radar sensor. While the target 170 is in motion (moving toward or away from the radar sensor 140), a Doppler (frequency) shift may be detected, with the Doppler shift proportional to the velocity of the target 170. More specifically, the Doppler shift of the target 170 may be determined by capturing the reflection 122 of the radio frequency signal 120 with the radar sensor 140 and processing the data using the processing circuitry 102 of the apparatus 100.

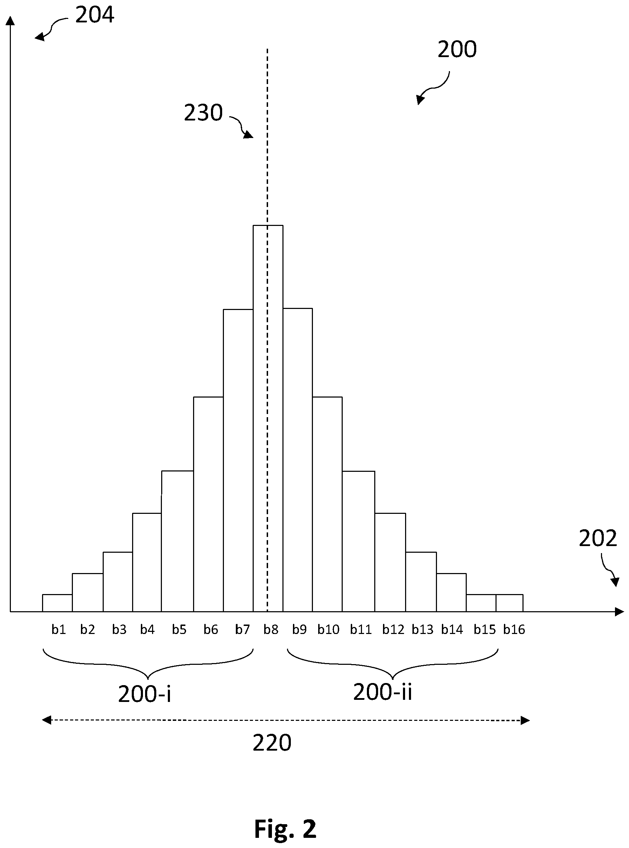

In a particular example of a Doppler radar sensor, the receive signal 130 may have a bandwidth of 4 kHz, which may include a range of $\pm 2$ kHz around a center frequency (e.g., 60 GHz). Generally, the range of the Doppler signal (i.e. bandwidth) for embodiments using a Doppler radar sensor may be in the Hz to kHz range. The mixer may convert the receive signal 130 to the IF signal, as described above, with the $xout(t)$ having a range of $\pm 2$ kHz centered around 0 Hz. In other words, the receive signal 130 may be mixed down from an original center frequency (e.g., 60 GHz) to a center frequency of 0 Hz (e.g., baseband). Furthermore, the ADC may sample the receive signal 130 with a sampling frequency greater than or equal to 4 kHz. As such, processing steps may be performed over a bandwidth that includes a full range of $\pm 2$ kHz on both respective sides of the center frequency (e.g., 0 Hz). This may lead to a positive and negative sides around the center frequency, as will be explained for Figs. 2 to 10B.

The aforementioned sampling of the receive signal 130 may lead to obtaining time-domain data, including both in-phase data (I component) representing a real portion and quadrature data (Q component) representing an imaginary (complex) portion of the receive signal 130. The I and Q components may be obtained by separating the receive signal 130 into two orthogonal channels, which may be achieved using a mixer or a demodulator that multiplies the receive signal 130 by two reference signals, or in-phase and quadrature carriers. The processing circuitry 100 may be configured to perform a discrete (fast) Fourier Transformation, DFT, or Doppler DFT, to obtain a periodic complex spectrum, including a magnitude and a phase. In some cases, only the I component or only the Q component of the receive signal 130 may be sufficient, whereas in other embodiments, both the I and Q components may be applied.

In embodiments including the Doppler radar sensor, mixers using both the I and Q components may be used specifically for determining whether a motion of the target 170 is moving toward or away from the radar sensor 140. Generally, the Doppler (frequency) shift may be used to detect velocity of a target, whereas a phase shift between the I and Q components may be caused by the Doppler shift and may be used for determining its direction (toward or away from the radar sensor 140). The phase shift between the I and Q components increasing may indicate the target 170 motion toward the radar sensor 140, whereas the phase shift decreasing may indicate the target 170 motion away from the radar sensor 140.

In some embodiments, the radar sensor may be an, e.g., FMCW (frequency modulated continuous wave) radar sensor. The emitted radio frequency signal 122 may be in the form of a plurality of chirps, including parts of the received reflection signal 122 which are correlated to respective emitted chirps. A chirp may be a radio frequency signal that varies in frequency over time. The frequency of the chirp may be swept over a specific frequency range, e.g., over a chirp bandwidth. For instance, the chirp may be a linearly modulated signal, i.e., a signal of which the frequency increases or decreases linearly over time.

In the example of an FMCW radar sensor, the receive signal 130 may also be mixed down to baseband. The Doppler frequency shift is centered around the beat frequency, which is dependent on the range determined for the target 170. Generally, for examples of an FMCW radar sensor, the beat frequency may be in the kHz to MHz range. With an FMCW radar sensor, in addition to a range DFT, a Doppler DFT may be performed.

An analysis of detecting a target motion using an FMCW radar sensor may also include generating a two-dimensional, 2D, range-Doppler map, which may provide greater insight to the target 170 motion with respect to its surrounding environment. Generally, the range-Doppler map is a common representation used in radar signal processing to visualize the range and Doppler characteristics of detected targets. The range-Doppler map may comprise a range axis representing the distance or range of the detected targets from the radar system, and a Doppler axis representing the radial velocity or motion of the targets along the line of sight (i.e. the direction or path along which the radar signal propagates, from a transmitter to the target, and back to the receiver). By combining these two dimensions, a 2D map may be formed, where each point represents a target's range and velocity information. In the case that the radar sensor is an FMCW radar sensor, the processing circuitry 102 may be configured to output a 2D FMCW range-Doppler map.

In particular, the magnitude of the frequency spectrum may be based on Doppler frequency shifts of the receive signal 130 and may be used for further processing for the detection of a motion of the target 170. The processing circuitry 102 may be configured to obtain a magnitude of a frequency spectrum based on the receive signal 130 using the I component. Generally, the magnitude of the frequency spectrum may represent a collection of magnitudes or absolute values of a plurality of complex amplitudes in a frequency domain. Herein, since the magnitude of the frequency spectrum may be processed without consideration of phase information, the frequency spectrum obtained by a DFT of the receive signal 130 will be referred to as the magnitude spectrum. The magnitude spectrum may provide information about an intensity or strength corresponding to a frequency component (e.g., a frequency bin) without considering phase information.

**Fig. 2** provides an exemplary magnitude spectrum 200. The magnitude spectrum is obtained within a frequency bandwidth 220 of the receive signal 130, which will be referred to as the bandwidth 220. The magnitude spectrum 200 comprises a first portion 200-i and a second portion 200-ii within the bandwidth 220. The first and second portions 200-i; 200-ii are symmetrically positioned with respect to a center frequency 230 (e.g., 0 Hz from the previous example). As such, the first and second portions 200-i; 200-ii will also be referred to as opposing portions. Being symmetrically positioned with respect to the center frequency 230, the first and second portions 200-i; 200-ii may each include an equivalent frequency range within the bandwidth 220. This may be an equal number of frequency bins of equivalent size or width, as depicted. One or more frequency bins within the bandwidth may be outside of the first and second portions 200-i; 200-ii (e.g., bin 8 and bin 16). The first and second portions 200-i; 200-ii, the bandwidth 220, and the center frequency 230 are depicted in each magnitude spectrum in Figs. 2 to 10B.

The bandwidth 220 may be defined by the sampling frequency used to generate discrete time-domain data by a sampling of the receive signal 130, as previously described for Fig. 1B. The magnitude spectrum is shown with a horizontal axis 202 and a vertical axis 204 (each also applying for further spectra, only depicted in Fig. 2). The horizontal axis 202 may represent a scale of frequency (e.g., Hz) in the spectrum. The vertical axis 204 may represent a scale of magnitude (e.g.,

strength or amplitude) for the magnitude spectrum obtained from the DFT of the time-domain data (i.e. sampled receive signal 130). Each depicted magnitude spectrum (i.e. Figs. 2 to 10B) show decreasing magnitude values for frequencies for larger positive and negative frequencies away from the center frequency 230, which may correspond to an increase in noise for smaller frequencies closer to 0 Hz.

A general principle in digital signal processing is that a sampled time-domain signal has a periodic spectrum. Given the periodicity, it may be more efficient to consider only one period of the magnitude spectrum in data processing for detection of a target 170 motion. As such, the magnitude spectrum for processing may be limited to the frequency bandwidth 220. For example, the bandwidth 220 may include a frequency range from 0 Hz to the sampling frequency or a frequency range from -0.5 times the sampling frequency to 0.5 times the sampling frequency. The two aforementioned examples may be considered as presenting equivalent data in different forms. The latter version of the bandwidth 220 between negative and positive values of half the sampling frequency will be used herein for ease of explanation. As such, the magnitude spectrum 200 of the receive signal 130 within the bandwidth 220 may be divided into a negative portion and a positive portion, with the two portions divided by the center frequency 230. The negative and positive portions are also symmetrically positioned with respect to the center frequency 230. As such, the aforementioned first and second portions 200-i; 200-ii symmetrically positioned with respect to the center frequency 230 within the bandwidth 220 will also be referred to as the negative and positive portions 200-i; 200-ii, respectively.

The negative and positive portions 200-i; 200-ii of the bandwidth 220 symmetrically positioned with respect to the center frequency 230 may be aligned to negative and positive Doppler shifts caused by a target 170 motion. Generally, a Doppler shift is a change in frequency that can be observed using a radar sensor. When a target is moving toward or away from the radar system, the Doppler effect causes a frequency shift in the reflected radar signal. This frequency shift may be directly proportional to the velocity of the target along a line of sight between the radar and the target (i.e. a direction or path along which the radar signal propagates, from a transmitter to the target, and back to the receiver). The Doppler shifts occurring within the field of view of the radar sensor may influence a particular portion or component of the magnitude spectrum.

For analysis of the magnitude spectrum within the bandwidth 220, the bandwidth 220 is divided into a plurality of (frequency) bins. Each frequency bin may represent a frequency component in the frequency scale with lower and upper limits of frequency. The magnitude spectrum 200 provides an example for magnitude spectra that may contain any arbitrary number of frequency bins, with a plurality of frequency bins on one side of the center frequency 230 (e.g., the left side as the first/negative portion) and a plurality of frequency bins on the opposite side of the center frequency 230 (e.g., the right side as the second/positive portion). The positive and negative portions 200-i; 200-ii may also be separated by one or more frequency bins.

Sixteen bins of the respective frequency spectrum are depicted, b1 to b16, with the center frequency 230 positioned in the middle of the eighth bin b8. While Fig. 2 provides an example of 16 bins, other examples not depicted may include a different number of bins, such as 32, 128, or 1024 bins, or another number of a power of 2, etc., which may be implemented for more efficient digital processing. Generally, configurations of the apparatus 100 disclosed herein may be used for the bandwidth 220 being divided into any number of bins.

Each bin may be centered on a bin frequency with a bin-frequency-range from a lower frequency limit of the bin to a higher frequency limit of the bin, whose values may depend on a pre-specified resolution. More specifically, certain bins may be associated with a range in Doppler shift caused by a certain change in velocity of the target 170 relative to the radar sensor 140. The frequency bins in the negative portion 200-i may be associated with a negative Doppler velocity, with a Doppler shift caused by the target 170 moving away from the radar sensor 140, and the frequency bins in the positive portion 200-ii may be associated with a positive Doppler velocity, with the target 170 moving toward the radar sensor 140.

Each bin is depicted with a rectangular box of a height that is proportional to the magnitude within the respective bin. For brevity, the value of the magnitude within a respective bin will be referred to as its magnitude value. In the example of the depicted spectrum 200, bin 8 corresponds to the highest magnitude value, followed by bins 7 and 9, and generally with successively lower magnitude values for bins positioned farther from the center frequency 230 until reaching the edge of the bandwidth 220, bins 1 and 16 (e.g., decreased noise for greater Doppler shifts/velocities). In the magnitude spectrum 200, the center frequency 230 may be positioned to be associated with a zero Doppler shift (i.e. 0 Hz). The bins positioned closer to the center frequency 230, in both the negative and positive portions 200-i; 200-ii, may be associated with a lower Doppler shift, while the bins positioned farther from the center frequency 230, in both the negative and positive portions 200-i; 200-ii, may be associated with a greater Doppler shift. The bins may also correspond to a frequency that is directly proportional to the Doppler velocity.

By analyzing the distribution and characteristics of the magnitude within respective bins of the magnitude spectrum 200 (e.g., symmetric/asymmetric features), it is possible to detect a motion of the target 170. The frequency spectra of Figs. 2, 3, 4, 6, 7A, 7B, and 8 correspond to a generally symmetric magnitude spectrum. Practical examples of magnitude spectra are never perfectly symmetric (e.g., due to noise), so the depicted symmetric magnitude spectra (depicted as perfectly symmetric) may be understood as examples of magnitude spectra that are generally symmetric (i.e. adequately symmetric, without significant asymmetry).

**EP 4 513 235 A1**

The detection of a target 170 motion may specifically make use of the spectrum's symmetric or asymmetric properties, depending on a type of the target 170 and the motions it tends to exhibit. In the case of the target 170 being a human being or a similarly moving being or object, motions may affect the magnitude within varying frequency bins, but may generally affect the magnitude on only one side of the spectrum. For example, most movements by a human in a field of view of the radar sensor 140 may be in one direction, either toward or away from the radar sensor 140. For example, this may be due to walking or a movement of a specific body part, which may occur in one direction (toward or away from the radar sensor 140) within a time frame of the receive signal 130 to be analyzed. Thus, a target 170 motion, specifically of a human target may generally cause asymmetric changes to a magnitude spectrum.

On the other hand, common disturbances that may commonly be within the field of view with the target 170 (e.g., fans, curtains, blinds, vibrations from loudspeakers, bushes, trees, rain, snow, etc.) may generally affect frequency bins of both the negative and positive portions of the bandwidth 220. For example, a vibration may cause quickly alternating motion both toward and away from the radar sensor 140. Other examples may relate to a highly cluttered area within the field view, which may lead to a partial scattering of the emitted and reflected signals to affect both sides of the magnitude spectrum 200. More specifically, the affected frequency components may generally be symmetrically positioned from each with respect to the center frequency 230 and affected in approximately the same amount. As such, a processing of the frequency spectrum may be performed, particularly within the bandwidth 220, to detect asymmetric changes caused by a target 170 motion, such as a motion of a human being, while ignoring symmetric changes caused by a disturbance or interference.

This can be done by providing a respective bin threshold for a plurality of frequency bins within the bandwidth 220. Applying such bin thresholds for a magnitude spectrum, such as the depicted magnitude spectrum 200, may enable a convenient form of detection for a specific type of target 170. Such detection may also be performed under a variety of conditions and without manual adjustment. The various embodiments of the apparatus 100 may be used toward detecting a motion of a human being (or other similarly moving living beings or objects). This is due to most movements of a human being causing asymmetric changes in a magnitude spectrum that can be generated using the radar system 150.

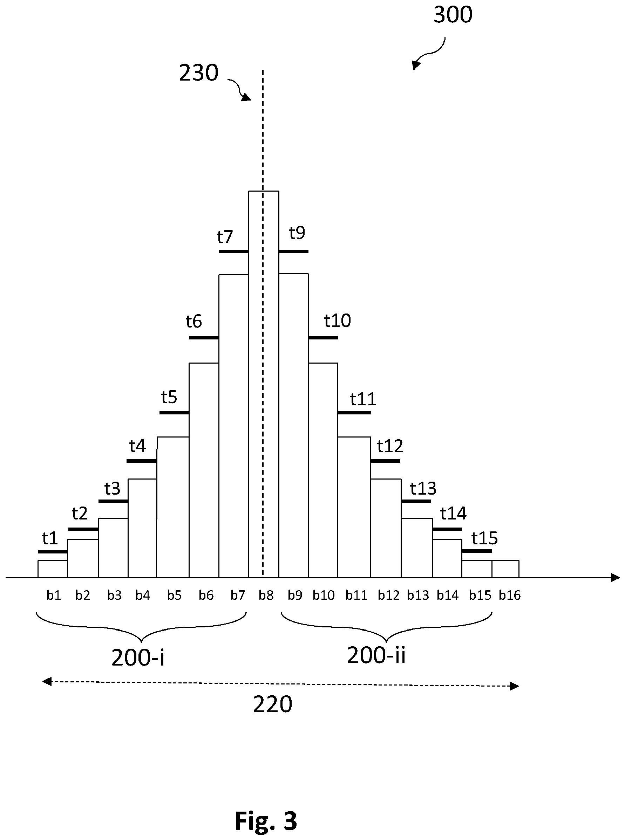

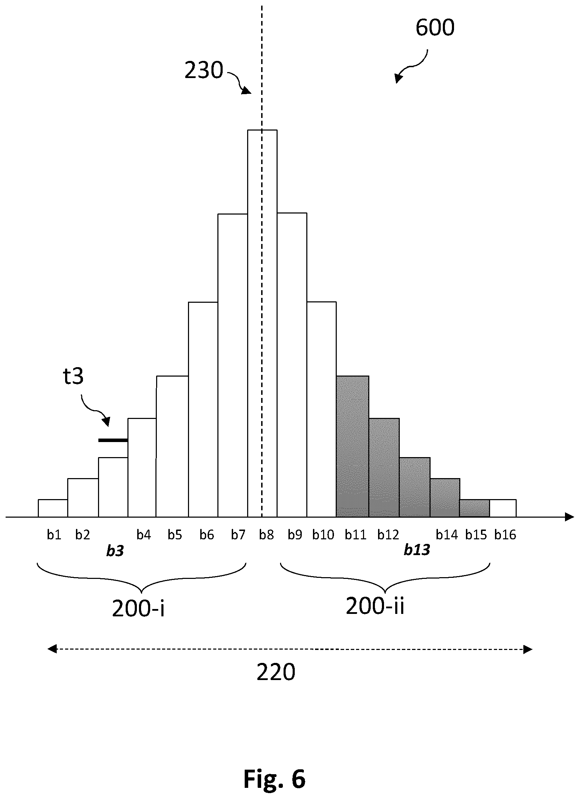

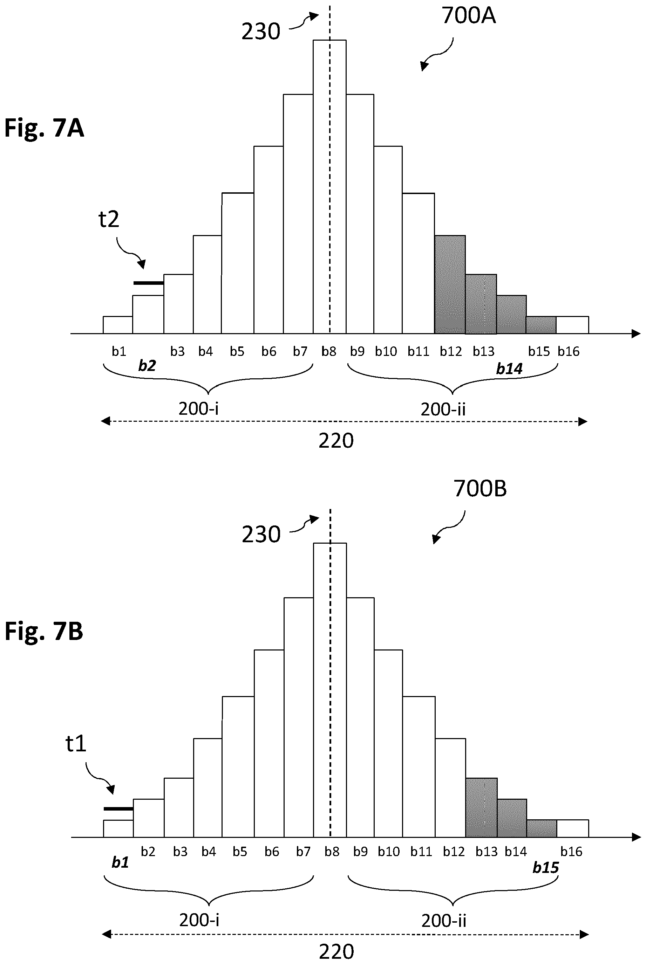

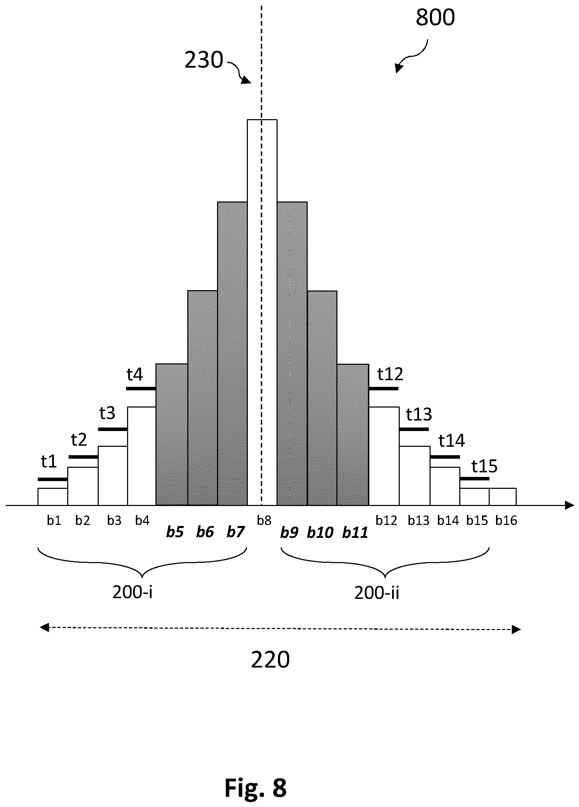

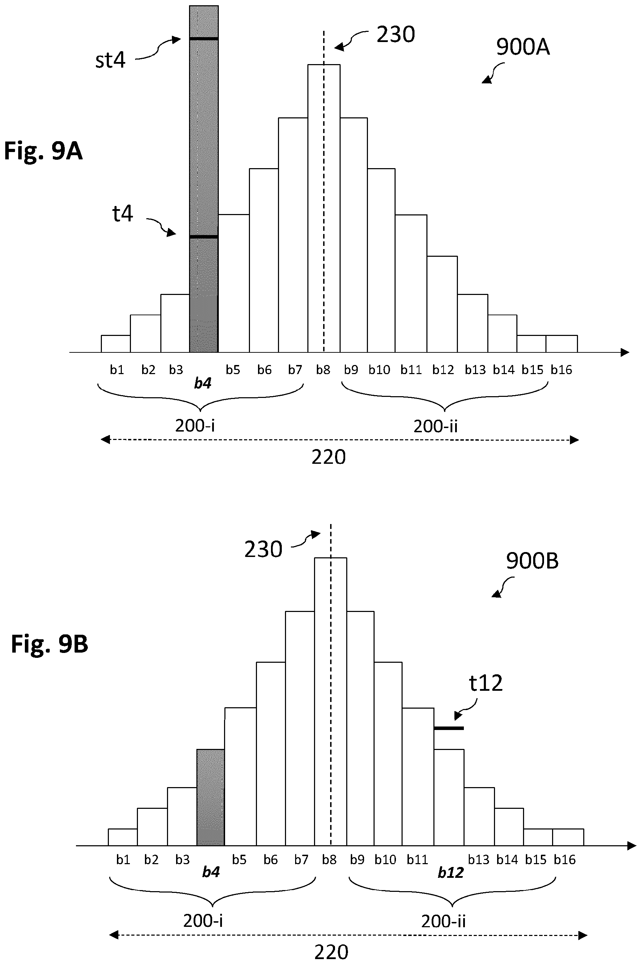

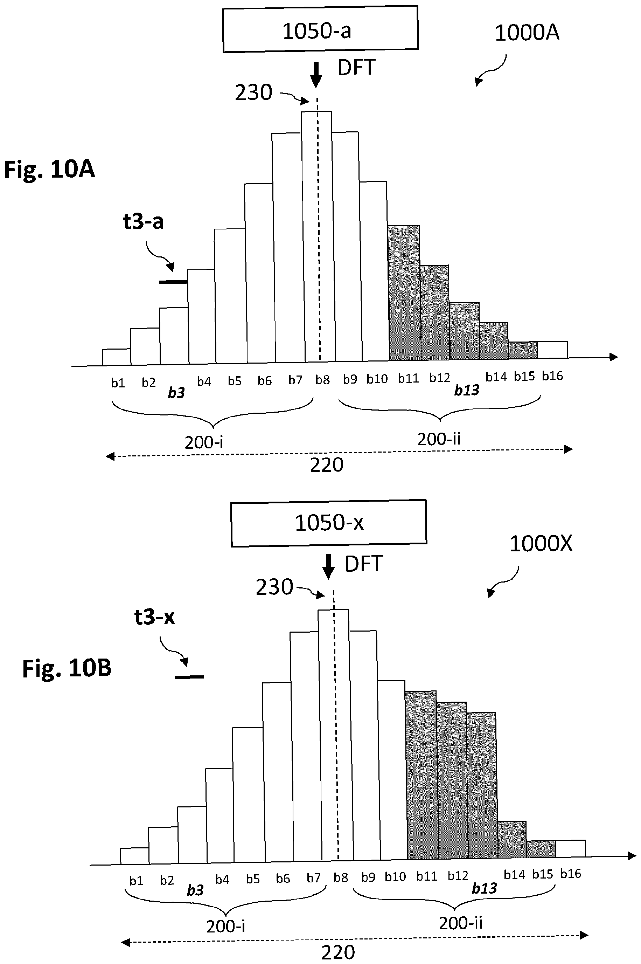

Illustrative examples providing greater detail to the bin thresholds are provided in Figs. 3, 4, and 5. Further embodiments, particularly related to how the bin thresholds may be determined, will be discussed in greater detail with reference to Figs. 6 and 7. Also, further embodiments related to how certain frequency bins may be excluded from having a bin threshold determined and decreasing false detections will be discussed with reference to Figs. 8 and 9. Finally, the adaptive nature of such processing steps for different portions of time-domain data of the receive signal 130 will be discussed with reference to Figs. 10A and 10B.

Fig. 3 depicts similarly to Fig. 2, a magnitude spectrum 300, also with a respective bin threshold for a plurality of the depicted bins. For the apparatus 100, the processing circuitry 102 is configured to determine a bin threshold for at least one bin in the first (i.e. negative) portion 200-i based on the magnitude of the frequency spectrum within or more bins in the second portion (i.e. positive) 200-ii. Furthermore, the processing circuitry 102 is configured to determine a bin threshold for at least one bin in the second portion 200-ii based on the magnitude of the frequency spectrum within or more bins in the first portion 200-i. The processing circuitry 102 is further configured to detect the target 170 motion based on the magnitude of the frequency spectrum exceeding the bin threshold in at least one bin within the bandwidth 220.

In some embodiments, the processing circuity 102 is configured to, for each of a plurality of bins within the first (i.e. negative) portion 200-i, determine a respective bin threshold, each based on the magnitude of the frequency spectrum within one or more bins in the second (i.e. positive) portion 200-ii. Each respective bin threshold in the first portion 200-i may correspond to the magnitude within a unique collection of bins (i.e. one or more bins) in the second portion 200-ii. This may apply vice versa for the respective bin thresholds of the second portion 200-ii. The processing circuitry 102 may be configured to, for each of a plurality of bins in the second (i.e. positive) portion 200-ii, determine a respective bin threshold, each based on the magnitude of the frequency spectrum within one or more bins in the first (i.e. negative) portion 200-i. Each respective bin threshold in the second portion 200-ii may correspond to the magnitude within a unique collection of bins (i.e. one or more bins) in the first portion 200-i.

For a reliable detection of a target 170 motion, the aforementioned plurality of bins for each portion 200-i; 200-ii having a respective threshold determined may be a large majority out of the total number of bins in the respective portion. For example in Fig. 3, all depicted bins of the first (negative) portion 200-i (b1 to b7) have a respective bin threshold determined, while all but one of the depicted bins of the second (positive) portion 200-ii (including b9 to b 15, but not b16) have a respective bin threshold determined. In some embodiments, exclusions of certain bins (e.g., described in Fig. 8) may be applied while maintaining a majority or large number of bins with respective bin thresholds for reliable detection. In other embodiments, each bin of the entire magnitude spectrum has a determined bin threshold. In general, for maximizing reliability of detection, all bins that may reliably be used for evaluating the symmetric/asymmetric properties of the magnitude spectrum may have a respective bin threshold determined.

For each of the plurality of bins in the first (negative) portion 200-i (e.g., b1 to b7), each respective bin threshold (e.g., t1 to t7) is based on the magnitude of the frequency spectrum 200 within one or more bins in the second (positive) portion 200-ii. Furthermore, for each of the plurality of bins in the second (positive) portion 200-ii (e.g., b9 to b15), each respective bin threshold (e.g., t9 to t15) is based on the magnitude of the frequency spectrum 200 within one or more bins in the first (negative) portion 200-i. The respective bin thresholds (e.g., t1 to t7 and t9 to t15) are depicted as a thick black line above the rectangular box representing the magnitude within the respective bin, specified as t1 to t7 for bins 1 to 7 and t9 to t15 for bins 9 to 15.

In some embodiments, each bin used for processing has a counterpart bin in the opposing portion that is symmetrically positioned thereto with respect to the center frequency 230. Furthermore, the number of frequency bins to be used in processing for the negative portion 200-i and the positive portion 200-ii of the center frequency 230 may be equal. As depicted, seven bin thresholds (t1 to t7) for seven frequency bins (b1 to b7) are located in the negative portion 200-i, while seven further bin thresholds (t9 to t15) for seven further frequency bins (b9 to b15) are located in the positive portion 200-ii. The eighth bin (to be referred to as bin 8 or b8, respectively) includes the center frequency 230 and is not part of the negative portion 200-i or positive portion 200-ii. As such, it is left without a bin threshold. Furthermore, the sixteenth bin (bin 16 or b16) is without a counterpart bin (symmetrically positioned with respect to the center frequency 230) and is also left without a bin threshold. The magnitude within bin 16 may be ignored also because it may correspond to a maximum speed at which the direction of a movement cannot be distinguished in comparison to lower speeds.

In the example of Fig. 3, fourteen of the sixteen bins have a counterpart bin that is symmetrically positioned from it with respect to the center frequency 230. More specifically, bin 1 is the counterpart to bin 15, bin 2 is the counterpart to bin 14, bin 3 is the counterpart to bin 13, bin 4 is the counterpart to bin 12, bin 5 is the counterpart to bin 11, bin 6 is the counterpart to bin 10, and bin 7 is the counterpart to bin 9, which also applies vice versa for each of the listed examples. In some embodiments, each bin of the entire bandwidth 220 has a counterpart bin, while in other embodiments, one or more bins are left without a counterpart bin. The determination of each bin threshold may be based on the magnitude value of the magnitude spectrum within the symmetrically positioned bin, i.e. within its counterpart bin.

Various embodiments may include determining each bin threshold based exclusively on the counterpart bin or based on one or more further frequency bins in addition to the counterpart bin. Alternatively, other groups of frequency bins in the opposing portion not including the counterpart bin may be used for determining each bin threshold. The processing circuitry 102 may be further configured to detect the target 170 motion in response to the magnitude of the frequency spectrum 200 exceeding the bin threshold in at least one bin within the bandwidth 220 based thereon.

Each bin threshold of the negative portion 200-i may be determined by multiplying a value that is determined using the magnitude of the frequency spectrum 200 within one or more bins of the positive portion 200-ii by a predefined value (factor). Furthermore, each bin threshold of the positive portion 200-ii may be determined by multiplying a value that is determined using the magnitude of the frequency spectrum within one or more bins of the negative portion 200-i by the predefined value (factor).

The predefined value may be selected by a desired degree of detection sensitivity. For example, a standard predefined value may be chosen to correspond to a standard detection sensitivity that may be unable to capture very subtle motion of the target 170 but may capture conventional motions or movement. Furthermore, if very fine motions of the target 170 are desired to be detected, the predefined value may be decreased from the standard value. This would provide a lower bin threshold, which may lead to a lower magnitude value of the bin exceeding the respective bin threshold. If it is desired to detect only significant motions that are more substantial than conventional motions, the predefined value may be increased from the standard value. This would provide a greater bin threshold, which may lead to a greater magnitude value of the bin being required to exceed the bin threshold. The predefined value may be adjusted, such as by a user input or an automated mechanism, for adjusting the sensitivity of detection.

Furthermore, multiple predefined values (factors) may be used, depending on the position of the bin with respect to the center frequency 230. For example, for bin thresholds corresponding to bins positioned closer to the center frequency 230, the predefined value may be higher or lower in comparison to those for bins positioned farther from the center frequency 230, among other possibilities. This may adjust the detection sensitivity for pre-specified frequency ranges by different amounts, which may be customized depending on a type of target 170 or a type of motion of the target 170 to be detected.

A detection of the target 170 motion is made in response to the magnitude exceeding the bin threshold in at least one bin within the bandwidth 220. If no bin threshold has been exceeded, then a new magnitude spectrum may be generated, corresponding to a DFT of time-domain data of a following time frame of the receive signal 130. The respective bin thresholds of the same frequency bins may be re-determined according to the new magnitude spectrum. A detection of the target motion may then be made on the condition that a respective bin threshold is exceeded by the magnitude within a bin in the new magnitude spectrum. This may be repeated as long as time-domain data of a new time frame of the receive signal is obtained by the apparatus 100.

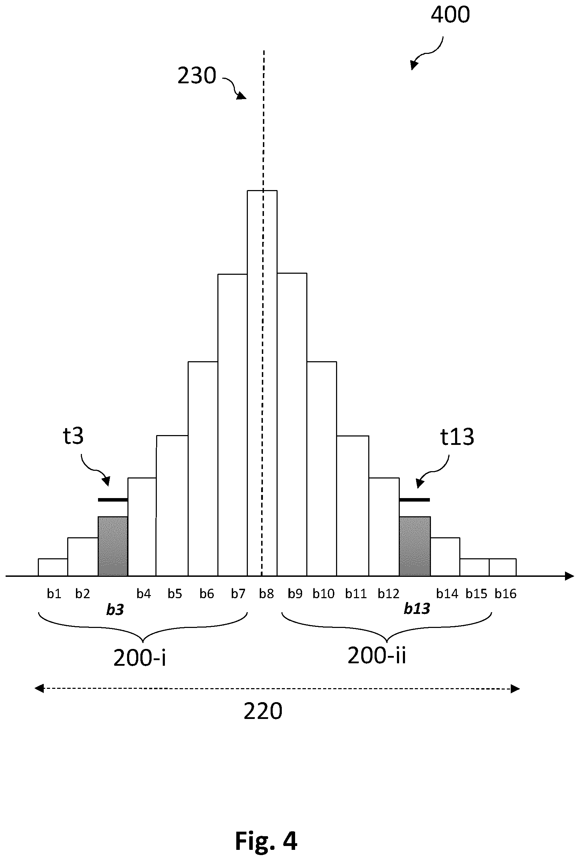

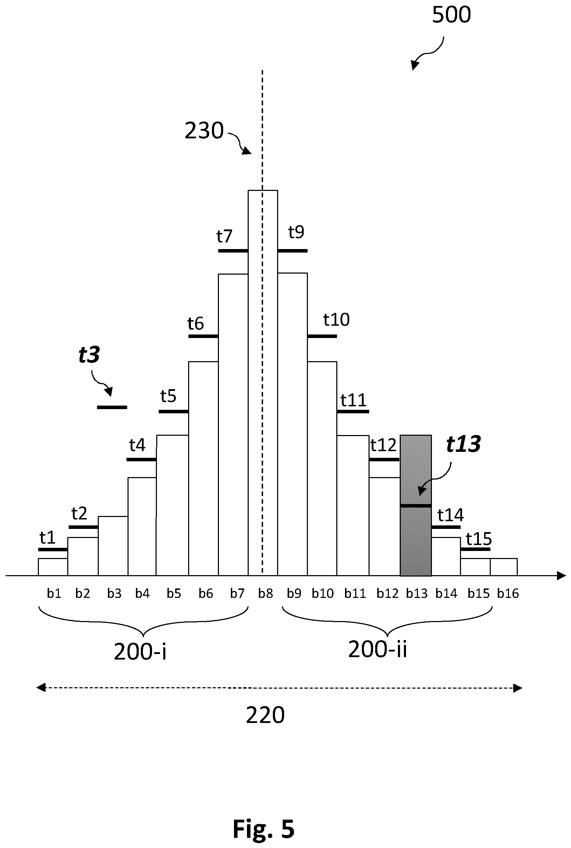

In a particular example, the bin threshold for a respective bin may be based solely on the counterpart bin. In this case, the bin threshold of bin 1 is determined solely based on the magnitude value of bin 15, and vice versa. The same may then apply for bins 2 and 14, bins 3 and 13, bins 4 and 12, bins 5 and 11, bins 6 and 10, and bins 7 and 9. The bin threshold for a bin may be determined using a multiplication of the magnitude specifically within its counterpart bin by a predefined value (factor). Illustrative examples for such embodiments are provided in Figs. 4 and 5.

**Fig. 4** depicts another symmetric magnitude spectrum 400, with the magnitude for bins 3 and 13 highlighted in grey and shown only with the bin-3-threshold (t3) and bin-13-threshold (t13). The bin-3-threshold (t3) is based on the magnitude within its counterpart bin, bin 13, while the bin-13-threshold (t13) is based on the magnitude within its counterpart bin, bin 3. Since the respective magnitude values of bin 3 and bin 13 in the depicted spectrum 400 are equal (i.e. the magnitude is approximately equal within both bin 3 and bin 13 without significant asymmetry), the bin-3-threshold (t3) and bin-13-threshold (t13) are also (approximately) equal.

The aforementioned predefined value (factor) may be, for example, 1.1. In this example, the threshold of each bin may be equivalent to 10% greater than the magnitude value of the counterpart bin. If the magnitude value of bin 15 is 2.0, then the bin-3-threshold (t3) may be 2.2. Given the symmetry of the magnitude spectrum 400 with the respect to the frequency center 230 in this example, the magnitude value of bin 3 may also be 2.0, and the bin-13-threshold (t13) may then be determined to also be 2.2. The example of counterpart bins 3 and 13 is herein provided for illustrative purposes. The predefined value may also be applied to other counterpart bin pairs, each pair also having equal magnitude values in Fig. 4. The symmetry in magnitude values in Fig. 4 may thus lead to a symmetry in thresholds, as illustrated for each pair of counterpart bins in Fig. 3.

Since for each bin, the magnitude is the same in both the respective bin and its counterpart bin, this leads to the magnitude in each bin not exceeding its respective bin threshold. Thus, in the case of a symmetric (i.e. adequately symmetric) magnitude spectrum, no target motion is detected.

**Fig. 5** depicts another exemplary magnitude spectrum 500. In comparison to the previous spectra 200; 300; 400, the magnitude spectrum 500 of Fig. 5 is significantly asymmetric, with the magnitude being changed only within bin 13 (highlighted in grey). Furthermore, given the change in the magnitude value of bin 13 from Figs. 2, 3, and 4, the bin-3-threshold (t3) has also been changed. On the other hand, since the magnitude within bin 3 is unchanged, the bin-13-threshold (t13) is unchanged. The magnitude values and bin thresholds for the remaining bins are also unchanged. The magnitude value of bin 13, now comprising a greater value (e.g., 2.4), is large enough to exceed the unchanged bin-13-threshold (2.2), as depicted.

For the case of a respective bin threshold based solely on the counterpart bin, the larger magnitude value of bin 13 may lead to an increased value for the bin-3-threshold. Continuing the previous example of the predefined value for multiplication being 1.1, multiplying the bin 13 magnitude value of 2.4 leads to a new bin-3-threshold (t3) of 2.64. While the unchanged magnitude value of bin 3 of 2.0 is well under 2.64, the new magnitude value of bin 13 of 2.4 exceeding the unchanged bin-13-threshold (t13) of 2.2 may be enough to detect a target 170 motion, with only a single magnitude value exceeding its respective bin threshold being necessary for such embodiments. In other embodiments, the magnitude exceeding a bin threshold within two or more respective bins may be required for detection, which may further decrease false positive detections. In the case of the spectrum 500 of Fig. 5, the increased magnitude within bin 13 may be associated with the motion of a human being or another similarly moving object, with the motion corresponding to a Doppler shift corresponding to the frequency of bin 13. Being on the positive side of the spectrum 500 with respect to the center frequency 230, the detected motion may correspond to a human being moving or making a motion toward the radar sensor.

While in the examples of Figs. 4 and 5, each bin threshold is determined solely based on the magnitude value of the counterpart bin, the examples of Figs. 6, 7A, and 7B present embodiments of each bin threshold being determined using the respective magnitude values of a plurality of bins including the counterpart bin.

**Fig. 6** depicts a magnitude spectrum 600 that is also symmetric. In contrast to the bin-3-threshold (t3) of Figs. 4 and 5 based solely on its counterpart bin 13, the bin-3-threshold (t3) in Fig. 6 is based on a plurality of respective magnitude values corresponding to a plurality of other frequency bins in the opposing portion, including the counterpart bin. The following in reference to the bin-3-threshold (t3) is provided as an example that may be applied to each of the bin thresholds, such as depicted in Fig. 3. Generally, each bin threshold in one portion may be based on respective magnitude values of a corresponding subset of bins in the opposing portion (e.g., a subset of bins that uniquely corresponds to the bin threshold), which may include the counterpart bin, positioned symmetrically to the bin for which the bin threshold is being determined, and/or one or more bins that are successively adjacent to the counterpart bin, as described below.

Instead of determining a bin threshold (t3) based solely on the counterpart bin (bin 13), other bins that are adjacent to (directly next to, neighboring) on the left and/or right side of bin 13 (bin 12 and bin 14) may also have their magnitude values used for determining the bin threshold of bin 3, such as by averaging. In a further example, a plurality of bins that are successively adjacent to the counterpart bin (bin 13) may also have their magnitude values used for determining the bin threshold for the counterpart bin of bin 13 (i.e. bin threshold t3 of bin b3). Successively adjacent herein is specified to describe a bin that is adjacent to the counterpart bin, adjacent to another bin that is adjacent to the counterpart bin, or adjacent to any bin that is included in a group of bins including the counterpart bin, with no gaps or non-included bins in between.

For example, bins 12 and 14 (being directly adjacent to bin 13) or bins 11 and 15 (being directly adjacent to bins 12 and 14) may be included in a group of bins that are successively adjacent to bin 13. The depicted subset of bins b11 to b15 (e.g., five successively adjacent bins including the counterpart bin) may form the (uniquely) corresponding subset of bins that is used for determining the bin threshold t3 for the bin b3. Further examples of bin thresholds following the same scheme may be bin threshold t4 (uniquely) corresponding to the subset of bins b10 to b14 and bin threshold t5 (uniquely) corresponding to the subset of bins b9 to b13.

Further successively adjacent bins may also be included if they are adjacent to other successively adjacent bins. Continuing with the example of threshold t3 and the subset of bins b11 to b15, bins 9 and 10 may also be included in a group of bins that are successively adjacent to bin 13 if bins 11 and 12 are also included. In some embodiments, any continuous group of any number of frequency bins that include the counterpart bin (e.g., bin 13) within either the negative portion 200-i or positive portion 200-ii may be used for determining the bin threshold (e.g., t3). In some embodiments, one or more bins within the continuous group may be excluded based on further criteria (e.g., inaccuracy, surpassing a spike threshold as presented in Fig. 9A, invalid data, etc.). In some embodiments, the counterpart bin may be excluded, while a group of bins successively adjacent to the counterpart bin may be used to determine the bin threshold. A combination of exclusions from a group of bins successively adjacent to the counterpart bin for various reasons is also possible.

The respective magnitude values of the successively adjacent bins (e.g., depicted as bins 11 to 15 in Fig. 6) may be used to determine the bin threshold (e.g., t3) by various computational techniques. One example is an averaging procedure, such as a mean or a weighted average. For a weighted average, each magnitude value may be assigned a respective weight proportional to an amount of relative importance within the resulting averaged value. For example, the counterpart bin (bin 13) may be assigned a larger weight compared to the successively adjacent bins. Optionally, various successively adjacent bins could also be assigned different weights. In a further example, a root-mean-square averaging may be used, such as with the equation depicted below. The variable $\sigma$ may represent the average being computed using N number of successively adjacent bins, $i$ being the index for the respective bin and $x_i$ being the magnitude value of the respective bin. Once an average result is obtained, it may be multiplied by a predefined value, which may be proportional to a selected degree of detection sensitivity, as previously described.

$$\sigma \approx \sqrt{\frac{1}{2N} \sum_{i=1}^{N} x_i^2}$$

For a larger number of bins, more detailed computational techniques for determining the bin threshold (t3) may be preferred. For example, the bin threshold may be determined assuming that the respective magnitude values follow a Rayleigh distribution. The time-domain data may be subject to white Gaussian noise that is normally distributed, leading to the magnitude values associated with the respective bins to be Rayleigh-distributed.

Each bin threshold may also be determined using a maximum-likelihood estimator for the respective magnitude values of the plurality of bins (bins 11 to 15) used to determine the bin threshold (t3), and may use the assumption of a Rayleigh distribution. The Rayleigh distribution may be defined with a scale parameter $\sigma$, which may be optimized in the maximum-likelihood estimation. A probability density function, PDF, may be provided for each magnitude value, such as depicted below, where x may represent the magnitude value, and $\sigma$ being the scale parameter to be estimated. The formula may represent the likelihood of observing the magnitude value given the scale parameter:

$$f(x; \sigma) = \left( \frac{x}{\sigma^2} \right) * \exp(-x^2 / (2\sigma^2))$$

For example, for a Rayleigh distribution, $f(x_i; \sigma)$ may be the Rayleigh probability density function for each magnitude value $x_i$ (e.g., the five magnitude values for bins 11 to 15). Additionally, a likelihood function L may be constructed representing the probability of observing the respective magnitude values given a specific parameter value $\sigma$. The likelihood function may be expressed as the product of the PDFs evaluated for each magnitude value, assuming the values are independent and identically distributed.

$$L(\sigma; x_1, x_2, x_3, x_4, x_5) = f(x_1; \sigma) * f(x_2; \sigma) * f(x_3; \sigma) * f(x_4; \sigma) * f(x_5; \sigma)$$

The maximum-likelihood estimation may also include taking the natural logarithm of the likelihood function ln (L) and determining a parameter that maximizes the log-likelihood function. This may be done, for example, by setting the derivative of the log-likelihood function with respect to $\sigma$ to zero and determining a value for $\sigma$. This may be done through analytical computation or numerical optimization techniques. The maximum-likelihood estimation may determine a parameter value $\sigma$ that maximizes the likelihood of observing the magnitude values under the assumed Rayleigh distribution (i.e. that best fits the magnitude values). While the provided example depicts one parameter to be adjusted, other examples may provide multiple parameters to be adjusted, which may provide a more accurate and/or precise estimation.

Once a value for the parameter $\sigma$ has been obtained, the corresponding distribution may be applied for determining the bin threshold (e.g., t3). This may be done, for example, by obtaining a new value for the magnitude value within the counterpart bin (e.g., bin 13) and adjusting the magnitude value to the new value provided by the maximum-likelihood estimation. The adjusted value may then be multiplied by a predefined value, which may be according to a desired detection sensitivity of the apparatus 100, as previously described. Alternatively, an averaging may be done using new respective magnitude values obtained by the maximum-likelihood estimation, among other possibilities.

**Figs. 7A and 7B** each provide a further symmetric magnitude spectrum 700A; 700B. The magnitude spectrum 700A is depicted with a bin-2-threshold (t2), while the magnitude spectrum 700B is depicted with a bin-1-threshold (t1). Both Fig. 7A and 7B serve to illustrate that the corresponding subset of bins for averaging to determine the respective bin threshold may be within a predefined frequency range (or bin range with a predefined number of bins) that is centered on the symmetrically positioned bin, and within the bandwidth 220. Furthermore, if any frequency bin does not meet each of the aforementioned conditions, then the processing circuitry 102 may be configured to not apply its magnitude value to determine the bin threshold.

The examples are provided as a contrast to the magnitude spectrum 600 of Fig. 6, which had a bin threshold determined based on five other frequency bins. In other cases for the same predefined frequency range (e.g., a range of 5 bins, as depicted in Fig. 5), the number of bins used for determining the bin threshold may be limited by the combination of the predefined frequency range centered on the counterpart bin and the bandwidth 220. Applying the same predefined frequency range (5 bins) centered on the counterpart bin to the magnitude spectra of Figs. 6A and 6B, a different number of bins (e.g., 4 bins and 3 bins, respectively), and thus a different number of magnitude values, may be used in the averaging and/or estimation procedure. Since the number of frequency bins with a greater or smaller frequency compared to the counterpart bin used for determining the bin threshold may vary, the above-mentioned (averaging/estimation) computational techniques may be adjusted for obtaining appropriate values (e.g., adjusting weights, etc.).

The bin-3-threshold (t3) shown in Fig. 6 is based on the counterpart bin (13), two successively adjacent bins of lower frequency (11 and 12) and two successively adjacent bins of higher frequency (14 and 15), all of which were within the bandwidth 220. However, the predefined range of five bins may not always fully fit within the bandwidth 220. For example, for determining the bin-2-threshold (t2) in Fig. 7A, the same range of five bins may be centered on bin 14. While two successively adjacent bins lower in frequency, bins 12 and 13, are within the bandwidth 220, only one successively adjacent bin greater in frequency, bin 15, is within the bandwidth 220 and has a counterpart bin (symmetrically positioned with respect to the center frequency 230). Thus, instead of the magnitude values of five bins used to determine the bin-3-threshold, as in Fig. 6, only four bins including the counterpart bin would be used in for determining the bin-2-threshold (t2).

The above example is continued for Fig. 7B and determining the bin-1-threshold (t1). For the bin-1-threshold (t1), while two successively adjacent bins to bin 15 lower in frequency, bins 13 and 14, are within the bandwidth 220, this is not the case for any successively adjacent bins greater in frequency (e.g., hypothetical magnitude values for bins 16 and 17, not depicted). Thus, instead of the magnitude values of five bins used for averaging as in Fig. 6 and four bins used for averaging in Fig. 7A, only three bins would be used to determine the bin-1-threshold (t1) when applying the same predefined range of five bins centered on the counterpart bin. Using the same predefined frequency range for bin selection, as presented above, the other bin thresholds that may not be based on five magnitude values include bins 6, 10, 14 (each bin threshold would be based on four magnitude values) and bins 7, 9, and 15 (each bin threshold would be based on three magnitude values).

The mechanism of frequency bin selection for determining a respective bin threshold provided in Figs. 6, 7A, and 7B, serve as an example of how the selected bins may be within a predefined frequency range centered on the symmetrically positioned bin and within the bandwidth 220, which may be applied in various forms. For example, the predefined frequency range may be any arbitrary number of frequency bins and may correspond to any arbitrary upper and lower frequency limits. Such upper and lower limits may also be asymmetric. In other words, the predefine frequency range need not be centered on the counterpart bin, as long as the counterpart bin is included.

Furthermore, in some embodiments, such a predefined frequency range to select bins for determining the bin threshold may vary, depending on which bin threshold is being determined. For example, bins in certain portions of the spectrum (e.g., bins closer or farther to the edge of the bandwidth 220) may have a smaller or larger predefined frequency range for averaging. Other related customizations or adjustments not mentioned herein are also possible, depending on characteristics of a specific target or optimal processing techniques.

In addition to accurately detecting such target 170 motions, it is also desirable to limit false detections. Embodiments related thereto will be provided in further detail with reference to Figs. 8, 9A, and 9B.

**Fig. 8** depicts another exemplary symmetric magnitude spectrum 800. In the case of Fig. 8, the bins in closest proximity to the center frequency 230 are highlighted in gray to be labeled as a bin associated with a low Doppler velocity. Bins of a low Doppler velocity (i.e. bins in closer proximity to the center frequency 230) may generally be affected by a disturbing object within the field of view of the radar sensor, while they may be less likely to be affected by a target motion. Disturbing objects, including air conditioning units, fans, blinds, bushes, and trees, among other examples, may appear in the background within the field of view of the radar sensor 140 and may affect the magnitude spectrum. While changes in the magnitude spectrum caused by such objects may generally be symmetric, and thus may generally remain irrelevant for detection, asymmetric changes from such objects may still occur. Thus, false detections based on disturbing objects may be more effectively prevented if bins of a low Doppler velocity are not included in bin threshold computations.

In many cases, instances of a target 170 motion may generally correspond to bins beyond a low Doppler velocity (i.e. bins positioned farther from the center frequency 230). Because of this, the bins associated with lower Doppler velocities may be excluded from bin threshold computations while sacrificing little in detection accuracy. In some embodiments of the apparatus 100, one or more bins within a predefined speed-threshold-frequency-range including the center frequency 230 may be excluded from having a respective bin threshold determined.

The predefined speed-threshold-frequency-range may be defined based on a Doppler speed threshold. For example, a Doppler speed threshold may be pre-specified as ±0.1 m/s. In this case, a frequency shift that corresponds to a positive or negative Doppler speed with an absolute value of 0.1 m/s may be determined, based on various settings or parameters of the radar system 150. The frequency bins corresponding to a frequency that is equivalent or lower than the frequency shift may then be selected and excluded from having a bin threshold determined. It may be suitable to apply a higher Doppler speed threshold for a more noisy or disturbed environment, such as ±0.3 m/s. The Doppler speed threshold may also be adapted depending on a use case, such as by a user input or an automated mechanism related to other sensing means.

Fig. 8 provides an illustrative example that may be extended to any speed-threshold-frequency-range including the center frequency 230 and including any number of frequency bins within the bandwidth 220 to be excluded from having a bin threshold determined. The speed-threshold-frequency-range may be based on a Doppler speed threshold, which may be adjustable. Bins 5, 6, and 7 in the negative portion, as well as bins 9, 10, and 11 in the positive portion, are highlighted in grey as an example of such a plurality of bins, each of which corresponds to a frequency that is below the Doppler speed threshold. In Fig. 8, bins 5 to 7 and 9 to 11 of the magnitude spectrum 800 may be excluded from having a respective bin threshold determined, while bins 1 to 4 and bins 12 to 15 may have a respective bin threshold determined, as depicted. In this example, if any of the respective magnitude value specifically of bins 1 to 4 or of bins 12 to 15 exceeds its respective bin threshold, then a target motion may be detected.

It is also possible that a target may be in the field of view of the radar sensor 140 while exhibiting only minor motion. In the case of a human target, minor sporadic movements may occur while being seated or standing. For example, while most of the body remains still, a hand or fingers may move slightly, such as to scratch another body part, use a smartphone, etc. For such instances, further processing may be performed to detect such movements, even if bin thresholds for bins in closer proximity to the center frequency 230 are not determined.

In some embodiments, the processing circuitry 102 may be configured to determine a mean magnitude based on the respective magnitude values of lower Doppler velocity bins (e.g., the bins within the speed-threshold-frequency-range) to compare to a corresponding mean-magnitude-threshold, which may be based on other higher Doppler velocity bins (e.g., the remaining bins outside the speed-threshold-frequency-range in the bandwidth 220). For example, in the case of the spectrum 800 Fig. 8, the respective magnitude values of bins 5 to 7 and bins 9 to 11 may be used for determining the mean magnitude, while the respective magnitude values of bins 1 to 4 and 12 to 15 may be used for determining the mean-magnitude-threshold. Both the mean magnitude and mean-magnitude-threshold may be computed using various averaging or estimation techniques, such as those previously described. A result of an averaging or estimation using the higher Doppler frequency bins (e.g., outside of the speed-threshold-frequency-range) may be multiplied by a predefined value (factor) to obtain the mean-magnitude-threshold to provide an appropriate comparison for the mean magnitude for detection of minor movements by the target.

Furthermore, the processing circuitry 102 may be configured to detect the target motion based on whether the mean magnitude exceeds the mean-magnitude-threshold. This mechanism of detections may be used in addition to whether a magnitude value of a bin exceeds its respective bin threshold, as previously presented. Furthermore, the range (number) of bins for determining the mean-magnitude-threshold and mean magnitude may each be adapted according to a desired detection sensitivity of finer movements by the target 170.

**Fig. 9A** depicts an exemplary asymmetric frequency spectrum 900A, particularly with a locally spiked magnitude in bin 4 being the only difference compared to the previous symmetric spectra. While previous figures have presented configurations for improving accuracy of detection for data considered as valid, it may also be the case that certain portions of data may be determined to be invalid, such as the case of a magnitude spectrum including a large, localized spike within a bin. More specifically, if the magnitude value of the bin is significantly greater than other bins in a predefined frequency range from the bin, it may be unlikely to be caused by a target 170 motion in the field of view of the radar sensor 140, and may thus undergo processing for correction.

In general, a localized spike, such as the magnitude value for bin 4, may correspond to a much higher magnitude value than all other magnitude values of any nearby frequency bin. The depiction of Fig. 9A, while only comprising 16 frequency bins, is meant to provide an example of a magnitude spectrum with any arbitrary number of frequency bins, wherein a large, localized spike and which frequency bins to be considered as nearby may be defined depending on the various characteristics of the magnitude spectrum.

The processing circuitry 102 may be configured to determine a spike threshold (e.g., st4 for bin 4) for each bin or for each of a plurality of bins within the bandwidth 220. In some embodiments, a spike threshold may be determined only for bins with a bin threshold. The spike threshold of a respective bin may be based on the magnitude values associated with a group of multiple successively adjacent bins (as previously defined) within a predefined frequency range also including the respective bin (e.g., the surrounding bins of bin 4, as depicted). The predefined frequency range for determining the spike threshold would thus be on the same side of the center frequency 230 with the respective bin. In the case of the spectrum 900A, bin 4 is depicted with a bin-4-spike-threshold (st4). For example, the processing circuitry 102 may be configured to detect a target motion if the magnitude value of bin 4 is above the bin-4-threshold (t4), but below the bin-4-spike-threshold (st4), which may analogously apply to all bins in the bandwidth 220 with a determined bin threshold. However, in the magnitude spectrum 900A, the magnitude value of bin 4 exceeds the bin-4-spike-threshold.

In the case that the magnitude value of a bin (e.g., b4) is greater than its respective spike threshold (e.g., st4), the processing circuitry 102 may be further configured to change the magnitude value (i.e. to change the magnitude of the frequency spectrum within the respective bin). For example, if a bin-spike-threshold is exceeded, the magnitude within the bin may be changed to be equivalent to an average of the magnitude values associated with multiple successively adjacent bins. In the case of Fig. 9A, a new value for the magnitude may be determined by averaging the respective magnitude values associated with bins 3 and 5, or with bins 2, 3, 5, and 6, or with bins 1, 2, 3, 5, 6, and 7. The result of the averaging may then replace the previous (spiked) magnitude value of bin 4.

In general, a value may be computed using the respective magnitude values associated with any group of bins within a predefined frequency range of the bin including the localized spike. The computed value may be obtained by averaging and/or using other forms of computation, such as a median magnitude value or maximum-likelihood-estimated value, among other possibilities, which may replace the previous (spiked) magnitude value. In other embodiments, such spiked magnitude values may be ignored.

**Fig. 9B** depicts an exemplary frequency spectrum 900B with a corrected magnitude within the frequency bin of the previous (spiked) magnitude of Fig 9A. Bin 4, previously corresponding to a magnitude value beyond its respective spike threshold (st4), is shown with a corrected magnitude, which may resemble the more symmetric form depicted in the spectra of Figs. 2, 3, 4, 6, 7A, 7B, and 8. The new magnitude value of bin 4 may then be used for determining the bin threshold (t12) for its counterpart bin, b12. In general, the processing circuitry 102 may be configured to perform a spike threshold check for all frequency bins, adjust any associated magnitude values as necessary to generate a corrected magnitude spectrum, determine the respective bin thresholds for each frequency bin based on the corrected magnitude spectrum, and detect a target motion if the corrected magnitude within any frequency bin exceeds its respective bin threshold.

During the operations of the radar system 150, a magnitude spectrum and the corresponding thresholds may be repeatedly determined over time for subsequent time frames of the receive signal 130. **Figs. 10A and 10B** each depict a frequency spectrum 1000A; 1000X corresponding to a respective time frame 1050-a; 1050-x of the receive signal 130, as well as respective bin thresholds for each time frame (t3-a; t3-x). The magnitude spectrum 1000A of Fig. 10A and the magnitude spectrum 1000X of Fig. 10B are different with respect to the magnitude within bins 11, 12, and 13. The first magnitude spectrum 1000A is obtained from a DFT of a first set of time-domain data measured over a first time frame 1050-a of the receive signal 130, as depicted. The second magnitude spectrum 1000X is obtained from a DFT of a further (e.g., second) set of time-domain data measured over a further time frame 1050-x of the receive signal 130. The second magnitude spectrum 1000X may represent any following magnitude spectrum corresponding to any following time frame 1050-x within a predetermined time span. The predetermined time span may be a measuring time span, wherein a round of measurements is taken to determine whether a motion of the target 170 can be detected specifically within that time span (e.g., 10 seconds).

The two magnitude spectra are provided to illustrate that each of the bin thresholds (e.g., bins 1 to 7 and bins 9 to 15) are adjustable (i.e. can be updated) through time as different portions of time-domain data within respective time frames of the receive signal 130 are processed. An illustrative example using bin 3 is provided, which is shown with a first bin-3-threshold (t3-a) in Fig. 10A and a following bin-3-threshold (t3-x) in Fig. 10B. Furthermore, in both magnitude spectra 1000A; 1000X, five bins on the opposite side of the center frequency 230, including the counterpart bin 13 and four successively adjacent bins, 11, 12, 14, and 15, are chosen for determining the bin-3-threshold. The bin-3-threshold may be determined based on an averaging and/or estimation technique, as previously described. The bin selection and averaging and/or estimation technique for determining the bin-3-threshold may then remain constant through multiple processing iterations, including a processing of multiple portions of time-domain data corresponding to respective time frames (e.g., 1050-a; 1050-x).

There is a notable difference between the magnitude values (heights of the rectangular boxes) of three of the five highlighted bins, bins 11, 12, and 13, between the first and second magnitude spectra 1000A; 1000X. The magnitude values for bins 11, 12, and 13 are depicted to be significantly greater in the second magnitude spectrum 1000X in comparison to those of the first magnitude spectrum 1000A. This may then lead to a different value for the bin-3-threshold for the respective spectrum. In the first magnitude spectrum 1000A, the magnitude values of the counterpart bin 13 and the successively adjacent bins 11 and 12 are each comparatively smaller leading to a smaller value for the first bin-3-threshold (t3-a). This is depicted with a large gap between the first magnitude within bin 3 and the first bin-3-threshold (t3-a) for Fig. 10A in comparison to Fig. 10B. On the other hand, in the second magnitude spectrum 1000X, the magnitude values of the counterpart bin 13 and the successively adjacent bins 11 and 12 are each comparatively larger, leading to a larger value for the following bin-3-threshold (t3-x). This is depicted with a larger gap between the second magnitude within bin 3 and the following bin-3-threshold (t3-x). Bins 14 and 15 are shown to have unchanged values between the two spectra 1000A; 1000X, and thus do not contribute to the change in bin-3-threshold in this example.

The processing circuitry 102 may be configured to detect the target 170 motion in response to the first magnitude within at least one bin of the bandwidth 220 (e.g., bin 3) exceeding the first respective bin threshold (e.g., t3-a) or in response to the further magnitude within at least one bin of the bandwidth 220 (e.g., bin 3) exceeding the following respective bin threshold (e.g., t3-x). The example of the bin-3-threshold changing between the respective magnitude spectra of two different portions of time-domain data of the receive signal 130 (i.e. two different time frames) is provided as an example to be applied for all bin thresholds with a counterpart bin that have not been excluded, such as bin thresholds t1 to t7 and t9 to t15 shown in Fig. 2 or bin thresholds t1 to t4 and t12 to t15 in Fig. 8.

In some embodiments, in addition to only requiring a single magnitude value exceeding its respective bin threshold for detecting a target motion, this may be only necessary for a single subset of time-domain data, with a magnitude within a bin exceeding a respective bin threshold for only one magnitude spectrum within a plurality generated and analyzed spectra. Alternatively, for the detection of target motion to be triggered, the magnitude within a bin exceeding its respective bin threshold may be required for multiple magnitude spectra (i.e. multiple time frames) to ensure greater reliability of target detection. Other combinations are also possible, such as requiring a magnitude within two or more bins exceeding a respective bin threshold and/or for two or more time frames within a certain number of processed time frames, etc.

In other words, the processing circuitry 102 may be configured to detect a motion of the target 170 by applying a sliding window to multiple (i.e. two or more) time frames (e.g., 1050-a; 1050-x) of the receive signal 130. The sliding window may refer to a number of time frames corresponding to a length of an observation time span (i.e. an observation window) that are evaluated for detection of a target 170 motion. For example, the sliding window may be a mechanism by which the apparatus 100 may be configured to store multiple time frames (e.g., three frames, among other possibilities) in a memory and perform processing for detection, as presented herein, for each of the (e.g., three) time frames (e.g., 1050-a; 1050-x). The time frames used for processing and detection may be consecutive time frames, including a first time frame (e.g., 1050-a) and one or more further immediately following time frames (e.g., 1050-x) without any time frames passing in between not used for processing and detection (i.e. X frames in a row).

Alternatively, the time frames 1050-a; 1050-x used for processing and detection may be nonconsecutive time frames. For example, a bin threshold may be surpassed for a first time frame (e.g., 1050-a), one or more time frames may be processed (analyzed) without a bin threshold being surpassed, and then a bin threshold may be surpassed for a following time frame (e.g., 1050-x). The detection may be based on the two instances of a bin threshold being surpassed, specifically within two separate time frames for a group of processed (analyzed) time frames of a pre-specified number, which may correspond to the aforementioned observation time span. The pre-specified number of time frames may be adjusted based on a desired detection sensitivity.

Furthermore, the number of required instances of a surpassed bin threshold for a respective time frame within the group of time frames may also be increased or reduced, depending on the desired detection sensitivity. A lower detection sensitivity may correspond to a higher number of such instances required and vice versa. For finer adjustment, both the number of required instances of a surpassed bin threshold within the group of time frames and the pre-specified number of processed (analyzed) time frames may be altered (i.e. requiring a surpassed bin threshold in X of the last Y frames, with adjustments to X and/or Y). Detecting a motion of the target 170, e.g., by application of the sliding window, may provide further options for improving reliability and stabilization of detection. As such, the apparatus 100 may further avoid false motion or false interference signal detections, or detection due to statistical outliers, which may be adjusted for each use case.

The radar system 150, applying one of the embodiments described herein of apparatus 100 may adapt to such environments or a field of view with such objects with its use of adaptive thresholds that exploit the symmetric/asymmetric properties of the magnitude spectrum. As previously described, the apparatus 100 provides a plurality of adaptive thresholds. Given its adaptive nature, the above-described apparatus 100 may be used for the radar system 150 under a variety of environmental conditions and with a variety of disturbing or interfering objects within the field of view of the radar sensor 140. For example, the presence of disturbing objects, such as vibrating objects or objects without a clearly defined surface (e.g. rotating fans, bushes, etc.) may generally cause symmetric changes in the magnitude spectrum compared to an undisturbed spectrum. The symmetric changes may correspond to a Doppler shift in both positive and negative directions. For example, this may be caused by a vibration of an object, causing it to move toward and away from the radar sensor. The positive and negative Doppler shifts may also be caused by a cluttered sensing environment, such as with multiple scattering points in a confined area, or multiple parts of an object vibrating in various directions.

Furthermore, a generally noisy environment, such as environments including rain or snow, may also cause symmetric changes in the magnitude spectrum compared to an otherwise undisturbed environment.

For example, when using the radar system 150 in a rainy environment, each of the bin thresholds may automatically be determined to be higher based on an increased noise level. If the magnitude within each bin threshold of the bandwidth 220 is increased, then all counterpart bins (and if applicable, bins successively adjacent thereto) of a respective bin will have an increased magnitude value. As such, all bin thresholds would also increase, and adapt to the overall increased magnitude. Thus, no manual adjustment would be required. The same is the case for a decreased magnitude for a less noisy environment when rain is not present. Furthermore, a detection of a target 170 motion may still be based on sufficient asymmetry within the magnitude spectrum, even with a very noisy or disturbed environment under which the radar system 150 is being used.

The radar system 150 applying the embodiments of the apparatus 100 may thus be considered to make use of a dynamic DFT threshold, adapting to various environments and disturbing objects within the field of view of the radar sensor 140 in a way that is not possible in other radar systems. Radar systems using one or more fixed thresholds cannot provide such automatic adjustment. Furthermore, other adjustable threshold algorithms, such as CFAR algorithms, do not make use of symmetric/asymmetric properties of a frequency spectrum (e.g., magnitude spectrum) as described herein, and are thus limited in its detection capabilities. On the other hand, the radar system 150 including the apparatus 100 described herein also makes possible various options for a finer form of detection, such as by various averaging and estimation techniques (e.g., maximum-likelihood estimation). Such options may provide an even more effective detection of a motion of a pre-specified target, including a human target.

Generally, the embodiments of the apparatus 100 provided herein may provide to the radar system 150 more accurate detection of the target motion and may enable detection of finer movements while also lowering its power consumption. If an alert mechanism is triggered for each detection and contributes to power consumption, this may be decreased by further limiting the number of false detections. The radar system 150 may also be used for more complex applications, such as using multiple radar sensors in a closer proximity (e.g., a single room), since the interference caused by another radar sensor may be limited. As such, multiple advantages are provided, including finer detection, a decrease in false detections, and an expansion of applications, which otherwise may not be possible or too cumbersome for effective results.

The advantages, as well as further details and aspects presented for the apparatus 100 and the radar system 150 are explained in connection with the proposed technique or one or more examples described above, e.g., with reference to Figs. 1A and 1B. The apparatus 100 and the radar system 150 may comprise one or more additional optional features corresponding to one or more aspects of the proposed technique, or one or more examples described above.

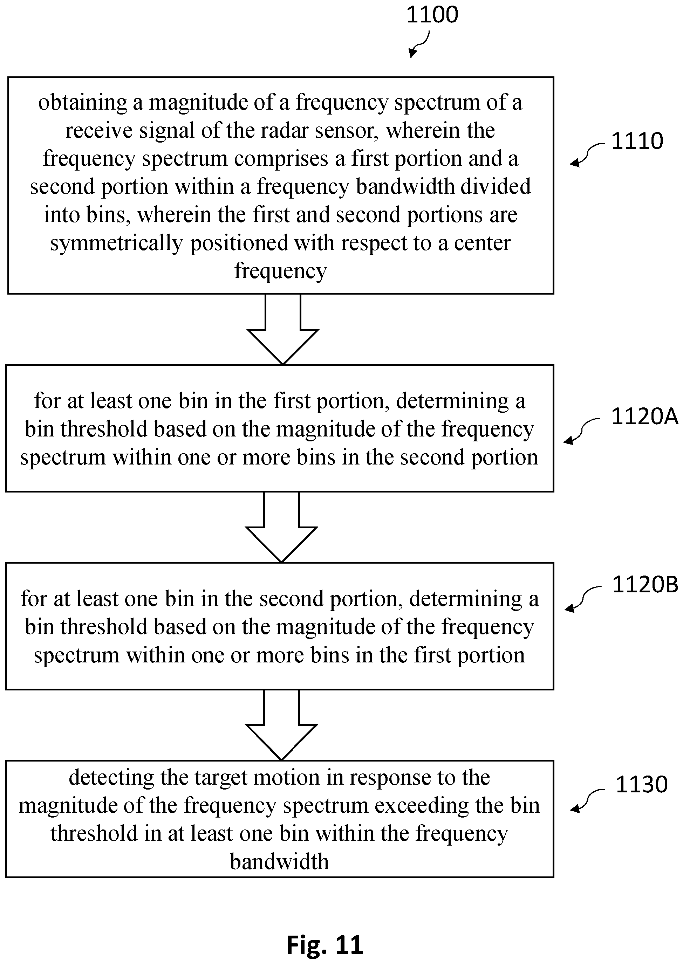

**Fig.** 11 illustrates a flow chart of an example of a (e.g., computer-implemented) method 1100. The method 1100 may be performed by the apparatus 100 described herein. The method 1100 comprises obtaining 1110 a magnitude of a frequency spectrum of a receive signal of the radar sensor. The frequency spectrum comprises a first portion and a second portion within a frequency bandwidth divided into bins. The first and second portions are symmetrically positioned with respect to a center frequency.

The method 1100 further comprises, for at least one bin in the first portion, determining 1120A a bin threshold based on the magnitude of the frequency spectrum within one or more bins in the second portion. The method 1100 further comprises, for at least one bin in the second portion, determining 1120B a bin threshold based on the magnitude of the frequency spectrum within one or more bins in the first portion. Furthermore, the method 1100 comprises detecting 1130 the target motion in response to the magnitude of the frequency spectrum exceeding the bin threshold in at least one bin within the frequency bandwidth.

In some embodiments, the method 1100 may comprise, for each of a plurality of bins in the first portion, determining a respective bin threshold, each based on the magnitude of the frequency spectrum within one or more bins in the second portion. In some embodiments, the method 1100 may further comprise, for each of a plurality of bins in the second portion, determining a respective bin threshold, each based on the magnitude of the frequency spectrum within one or more bins in the first portion.

More details and aspects of the method 1100 are explained in connection with the proposed technique or one or more examples described above, e.g., with reference to Figs. 1A and 1B. The method 1100 may comprise one or more additional optional features corresponding to one or more aspects of the proposed technique, or one or more examples described above.

In the following, some examples of the proposed technique are presented:

An example (e.g., example 1) relates to an apparatus for detecting a target motion in a field of view of a radar sensor, comprising processing circuitry configured to obtain a magnitude of a frequency spectrum of a receive signal of the radar sensor, wherein the frequency spectrum comprises a first portion and a second portion within a frequency bandwidth divided into bins, wherein the first and second portions are symmetrically positioned with respect to a center frequency, for at least one bin in the first portion, determine a bin threshold based on the magnitude of the frequency spectrum within one or more bins in the second portion, and for at least one bin in the second portion, determine a bin threshold based on the magnitude of the frequency spectrum within one or more bins in the first portion, and detect the target motion in response to the magnitude of the frequency spectrum exceeding the bin threshold in at least one bin within the frequency bandwidth.

Another example (e.g., example 2) relates to a previous example (e.g., example 1 or to any other example), further comprising that each bin threshold of the first portion is determined by multiplying a respective value that is determined using the magnitude of the frequency spectrum within one or more bins of the second portion by a predefined factor, and wherein each bin threshold of the second portion is determined by multiplying a respective value that is determined using the magnitude the frequency spectrum within one or more bins of the first portion by the predefined factor.

Another example (e.g., example 3) relates to a previous example (e.g., one of the examples 1 or 2 or to any other example), further comprising that each bin is associated with a magnitude value corresponding to the magnitude of the frequency spectrum within the respective bin, and wherein each bin threshold is based on one or more magnitude values of a corresponding subset of bins including a bin that is symmetrically positioned with respect to the center frequency (230) and/or one or more bins that are successively adjacent to the symmetrically positioned bin.

Another example (e.g., example 4) relates to a previous example (e.g., example 3 or to any other example), further comprising that the corresponding subset of bins is within a predefined frequency range centered on the symmetrically positioned bin and within the frequency bandwidth.

Another example (e.g., example 5) relates to a previous example (e.g., example 3, example 4, or to any other example), further comprising that each bin threshold is determined by obtaining a respective computed value based on the one or more magnitude values of the corresponding subset of bins using a maximum-likelihood estimation of a Rayleigh distribution, and multiplying the respective computed value by a predefined factor.

Another example (e.g., example 6) relates to a previous example (e.g., one of the examples 3 to 5 or to any other example), further comprising that the processing circuitry is configured to, for each of a plurality of bins, determine a spike threshold, wherein the spike threshold for a bin is based on respective magnitude values associated with a group of bins within a predefined frequency range including the bin, and if the magnitude of the frequency spectrum in a bin exceeds its spike threshold, determine a new magnitude value, and change the magnitude of the frequency spectrum in the bin to the new magnitude value.

Another example (e.g., example 7) relates to a previous example (e.g., one of the examples 1 to 6 or to any other example), further comprising that the processing circuitry is configured to determine a speed-threshold-frequency-range including the center frequency, wherein the lower and upper limits of the speed-threshold-frequency-range are based on a Doppler speed threshold, and wherein each bin within the speed-threshold-frequency-range is excluded from having a respective bin threshold determined.

Another example (e.g., example 8) relates to a previous example (e.g., one of the examples 1 to 7 or to any other example), further comprising that each bin is associated with a magnitude value corresponding to the magnitude of the frequency spectrum within the respective bin, and wherein the processing circuitry is configured to determine a mean magnitude for the respective magnitude values associated with the one or more bins within the speed-threshold-frequency-range, determine a mean-magnitude-threshold based on the respective magnitude values associated with the bins outside of the speed-threshold-frequency-range and within the frequency bandwidth, and detect the target motion if the mean magnitude exceeds the mean-magnitude-threshold.

Another example (e.g., example 9) relates to a previous example (e.g., one of the examples 1 to 8 or to any other example), further comprising that the magnitude of the frequency spectrum corresponds to a Fourier Transformation of the receive signal within a first time interval, and wherein each bin threshold is a first bin threshold based on the receive signal within the first time interval, and wherein the processing circuitry is further configured to obtain a plurality of magnitudes of the frequency spectrum within the frequency bandwidth, each corresponding to a Fourier Transformation of the receive signal within a respective time frame; for each magnitude, update each bin threshold based on the respective magnitude, store each magnitude and each bin threshold for the respective magnitude in a memory, and detect the target motion in response to at least two of the magnitudes of the frequency spectrum each exceeding at least one of its bin thresholds in the respective bin within the frequency bandwidth.

Another example (e.g., example 10) relates to a previous example (e.g., one of the examples 1 to 9 or to any other example), further comprising that the frequency bandwidth is defined by a sampling frequency used to generate the receive signal.

Another example (e.g., example 11) relates to a previous example (e.g., one of the examples 1 to 10 or to any other example), further comprising that the radar sensor is a Doppler radar sensor, and wherein each bin is associated with a corresponding Doppler velocity of the target that is measured using the Doppler effect.

Another example (e.g., example 12) relates to a previous example (e.g., one of the examples 1 to 11 or to any other example), further comprising that the radar sensor is a frequency-modulated continuous wave, FMCW, sensor, and wherein the processing circuitry is configured to output a two-dimensional, 2D, FMCW range-Doppler map based on the detection of a target motion.

An example (e.g., example 13) relates to a radar system, comprising an apparatus according to a previous example (e.g., any one of examples 1 to 12) or to any other example, and a radar sensor configured to generate the receive signal.

An example (e.g., example 14) relates to a method for detecting a target motion in a field of view of a radar sensor, comprising obtaining a magnitude of a frequency spectrum of a receive signal of the radar sensor, wherein the frequency spectrum comprises a first portion and a second portion within a frequency bandwidth divided into bins, wherein the first and second portions are symmetrically positioned with respect to a center frequency, for at least one bin in the first portion, determining a bin threshold based on the magnitude of the frequency spectrum within one or more bins in the second portion, for at least one bin in the second portion, determining a bin threshold based on the magnitude of the frequency spectrum within one or more bins in the first portion, and detecting the target motion in response to the magnitude of the frequency spectrum exceeding the bin threshold in at least one bin within the frequency bandwidth.

An example (e.g. example 15) relates to a program having a program code for performing a method according to a previous example (e.g. example 14) when the program is executed on a processor or programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100) for detecting a target (170) motion in a field of view of a radar sensor (140), comprising processing circuitry (102) configured to:

   obtain a magnitude of a frequency spectrum of a receive signal (130) of the radar sensor (140), wherein the frequency spectrum comprises a first portion (200-i) and a second portion (200-ii) within a frequency bandwidth (220) divided into bins, wherein the first (200-i) and second (200-ii) portions are symmetrically positioned with respect to a center frequency (230),
   for at least one bin in the first portion (200-i), determine a bin threshold based on the magnitude of the frequency spectrum within one or more bins in the second portion (200-ii), and for at least one bin in the second portion (200-ii), determine a bin threshold based on the magnitude of the frequency spectrum within one or more bins in the first portion (200-i), and
detect the target (170) motion in response to the magnitude of the frequency spectrum exceeding the bin threshold in at least one bin within the frequency bandwidth (220).

2. The apparatus (100) of claim 1, wherein each bin threshold of the first portion (200-i) is determined by multiplying a respective value that is determined using the magnitude of the frequency spectrum within one or more bins of the second portion (200-ii) by a predefined factor, and wherein each bin threshold of the second portion (200-ii) is determined by multiplying a respective value that is determined using the magnitude the frequency spectrum within one or more bins of the first portion (200-i) by the predefined factor.

3. The apparatus (100) of claim 1 or claim 2, wherein each bin is associated with a magnitude value corresponding to the magnitude of the frequency spectrum within the respective bin, and
wherein each bin threshold is based on one or more magnitude values of a corresponding subset of bins including a bin that is symmetrically positioned with respect to the center frequency (230) and/or one or more bins that are successively adjacent to the symmetrically positioned bin.

4. The apparatus (100) of claim 3, wherein the corresponding subset of bins is within a predefined frequency range centered on the symmetrically positioned bin and within the frequency bandwidth (220).

5. The apparatus (100) of claim 3 or claim 4, wherein each bin threshold is determined by obtaining a respective computed value based on the one or more magnitude values of the corresponding subset of bins using a maximum-likelihood estimation of a Rayleigh distribution, and multiplying the respective computed value by a predefined factor.

6. The apparatus (100) of any one of claims 3 to 5, wherein the processing circuitry (102) is configured to:

for each of a plurality of bins, determine a spike threshold, wherein the spike threshold for a bin is based on respective magnitude values associated with a group of bins within a predefined frequency range including the bin, and
if the magnitude of the frequency spectrum in a bin exceeds its spike threshold, determine a new magnitude value, and change the magnitude of the frequency spectrum in the bin to the new magnitude value.

7. The apparatus (100) of any one of the previous claims, wherein the processing circuitry (102) is configured to determine a speed-threshold-frequency-range including the center frequency (230), wherein the lower and upper limits of the speed-threshold-frequency-range are based on a Doppler speed threshold, and wherein each bin within the speed-threshold-frequency-range is excluded from having a respective bin threshold determined.

8. The apparatus (100) of claim 7, wherein each bin is associated with a magnitude value corresponding to the magnitude of the frequency spectrum within the respective bin, and wherein the processing circuitry (102) is configured to:

determine a mean magnitude for the respective magnitude values associated with the one or more bins within the speed-threshold-frequency-range,
determine a mean-magnitude-threshold based on the respective magnitude values associated with the bins outside of the speed-threshold-frequency-range and within the frequency bandwidth (220), and
detect the target (170) motion if the mean magnitude exceeds the mean-magnitude-threshold.

9. The apparatus (100) of any one of the previous claims, wherein the magnitude of the frequency spectrum corresponds to a Fourier Transformation of the receive signal (130) within a first time interval (1050-a), and wherein each bin threshold is a first bin threshold based on the receive signal (130) within the first time interval (1050-a), and wherein the processing circuitry (102) is further configured to:

obtain a plurality of magnitudes of the frequency spectrum within the frequency bandwidth (220), each corresponding to a Fourier Transformation of the receive signal (130) within a respective time frame (1050-x),
for each magnitude, update each bin threshold based on the respective magnitude,
store each magnitude and each bin threshold for the respective magnitude in a memory, and
detect the target (170) motion in response to at least two of the magnitudes of the frequency spectrum each exceeding at least one of its bin thresholds in the respective bin within the frequency bandwidth (220).

10. The apparatus (100) of any one of the previous claims, wherein the frequency bandwidth (220) is defined by a sampling frequency used to generate the receive signal (130).

11. The apparatus (100) of any one of the previous claims, wherein the radar sensor (140) is a Doppler radar sensor, and wherein each bin is associated with a corresponding Doppler velocity of the target (170) that is measured using the Doppler effect.

12. The apparatus (100) of any one of the previous claims, wherein the radar sensor (140) is a frequency-modulated continuous wave, FMCW, sensor, and wherein the processing circuitry (102) is configured to output a two-dimensional, 2D, FMCW range-Doppler map based on the detection of the target (170) motion.

13. A radar system (150), comprising:

   an apparatus (100) according to any one of claims 1 to 12; and
   a radar sensor (140) configured to generate the receive signal (130).

14. A method (1100) for detecting a target motion in a field of view of a radar sensor, comprising:

   obtaining (1110) a magnitude of a frequency spectrum of a receive signal of the radar sensor, wherein the frequency spectrum comprises a first portion and a second portion within a frequency bandwidth divided into bins, wherein the first and second portions are symmetrically positioned with respect to a center frequency,
   for at least one bin in the first portion, determining (1120A) a bin threshold based on the magnitude of the frequency spectrum within one or more bins in the second portion,
   for at least one bin in the second portion, determining (1120B) a bin threshold based on the magnitude of the frequency spectrum within one or more bins in the first portion, and
   detecting (1130) the target motion in response to the magnitude of the frequency spectrum exceeding the bin threshold in at least one bin within the frequency bandwidth.

15. A program having a program code for performing the method (1100) according to claim 14 when the program is executed on a processor or programmable hardware.

**Amended claims in accordance with Rule 137(2) EPC.**

1. An apparatus (100) for detecting a target (170) motion in a field of view of a radar sensor (140), comprising processing circuitry (102) configured to:

   obtain a magnitude of a frequency spectrum of a receive signal (130) of the radar sensor (140), wherein the frequency spectrum comprises a first portion (200-i) and a second portion (200-ii) within a frequency bandwidth (220) divided into bins, wherein the first (200-i) and second (200-ii) portions are symmetrically positioned with respect to a center frequency (230),
   for each of a plurality of bins in the first portion (200-i), determine a respective bin threshold based on the magnitude of the frequency spectrum within one or more bins in the second portion (200-ii), and for each of a plurality of bins in the second portion (200-ii), determine a respective bin threshold based on the magnitude of the frequency spectrum within one or more bins in the first portion (200-i), and
   detect the target (170) motion in response to the magnitude of the frequency spectrum exceeding the bin threshold in at least one bin within the frequency bandwidth (220),
   wherein each bin is associated with a magnitude value corresponding to the magnitude of the frequency spectrum within the respective bin, and
   wherein each bin threshold is based on one or more magnitude values of a corresponding subset of bins including a bin that is symmetrically positioned with respect to the center frequency (230) and/or one or more bins that are successively adjacent to the symmetrically positioned bin.

2. The apparatus (100) of claim 1, wherein each bin threshold of the first portion (200-i) is determined by multiplying a respective value that is determined using the magnitude of the frequency spectrum within one or more bins of the second portion (200-ii) by a predefined factor, and wherein each bin threshold of the second portion (200-ii) is determined by multiplying a respective value that is determined using the magnitude the frequency spectrum within one or more bins of the first portion (200-i) by the predefined factor.

3. The apparatus (100) of claim 1 or claim 2, wherein the corresponding subset of bins is within a predefined frequency range centered on the symmetrically positioned bin and within the frequency bandwidth (220).

4. The apparatus (100) of any one of the previous claims, wherein each bin threshold is determined by obtaining a respective computed value based on the one or more magnitude values of the corresponding subset of bins using a maximum-likelihood estimation of a Ray-leigh distribution, and multiplying the respective computed value by a predefined factor.

5. The apparatus (100) of any one of the previous claims, wherein the processing circuitry (102) is configured to:

for each of a plurality of bins, determine a spike threshold, wherein the spike threshold for a bin is based on respective magnitude values associated with a group of bins within a predefined frequency range including the bin, and
if the magnitude of the frequency spectrum in a bin exceeds its spike threshold, determine a new magnitude value, and change the magnitude of the frequency spectrum in the bin to the new magnitude value.

6. The apparatus (100) of any one of the previous claims, wherein the processing circuitry (102) is configured to determine a speed-threshold-frequency-range including the center frequency (230), wherein the lower and upper limits of the speed-threshold-frequency-range are based on a Doppler speed threshold, and wherein each bin within the speed-threshold-frequency-range is excluded from having a respective bin threshold determined.

7. The apparatus (100) of claim 6, wherein each bin is associated with a magnitude value corresponding to the magnitude of the frequency spectrum within the respective bin, and wherein the processing circuitry (102) is configured to:

determine a mean magnitude for the respective magnitude values associated with the one or more bins within the speed-threshold-frequency-range,
determine a mean-magnitude-threshold based on the respective magnitude values associated with the bins outside of the speed-threshold-frequency-range and within the frequency bandwidth (220), and
detect the target (170) motion if the mean magnitude exceeds the mean-magnitude-threshold.

8. The apparatus (100) of any one of the previous claims, wherein the magnitude of the frequency spectrum corresponds to a Fourier Transformation of the receive signal (130) within a first time interval (1050-a), and wherein each bin threshold is a first bin threshold based on the receive signal (130) within the first time interval (1050-a), and wherein the processing circuitry (102) is further configured to:

obtain a plurality of magnitudes of the frequency spectrum within the frequency bandwidth (220), each corresponding to a Fourier Transformation of the receive signal (130) within a respective time frame (1050-x),
for each magnitude, update each bin threshold based on the respective magnitude,
store each magnitude and each bin threshold for the respective magnitude in a memory, and
detect the target (170) motion in response to at least two of the magnitudes of the frequency spectrum each exceeding at least one of its bin thresholds in the respective bin within the frequency bandwidth (220).

9. The apparatus (100) of any one of the previous claims, wherein the frequency bandwidth (220) is defined by a sampling frequency used to generate the receive signal (130).

10. The apparatus (100) of any one of the previous claims, wherein the radar sensor (140) is a Doppler radar sensor, and wherein each bin is associated with a corresponding Doppler velocity of the target (170) that is measured using the Doppler effect.

11. The apparatus (100) of any one of the previous claims, wherein the radar sensor (140) is a frequency-modulated continuous wave, FMCW, sensor, and wherein the processing circuitry (102) is configured to output a two-dimensional, 2D, FMCW range-Doppler map based on the detection of the target (170) motion.

12. A radar system (150), comprising:

an apparatus (100) according to any one of claims 1 to 11; and
a radar sensor (140) configured to generate the receive signal (130).

13. A computer-implemented method (1100) for detecting a target motion in a field of view of a radar sensor, comprising:

obtaining (1110) a magnitude of a frequency spectrum of a receive signal of the radar sensor, wherein the frequency spectrum comprises a first portion and a second portion within a frequency bandwidth divided into bins, wherein the first and second portions are symmetrically positioned with respect to a center frequency, for each of a plurality of bins in the first portion, determining (1120A) a respective bin threshold based on the magnitude of the frequency spectrum within one or more bins in the second portion, for each of a plurality of bins in the second portion, determining (1120B) a respective bin threshold based on the magnitude of the frequency spectrum within one or more bins in the first portion, and detecting (1130) the target motion in response to the magnitude of the frequency spectrum exceeding the bin threshold in at least one bin within the frequency bandwidth, wherein each bin is associated with a magnitude value corresponding to the magnitude of the frequency spectrum within the respective bin, and wherein each bin threshold is based on one or more magnitude values of a corresponding subset of bins including a bin that is symmetrically positioned with respect to the center frequency (230) and/or one or more bins that are successively adjacent to the symmetrically positioned bin.

14. A program having a program code for performing the method (1100) according to claim 14 when the program is executed on a processor or programmable hardware.

**Fig. 1A**

**Fig. 1B**

**Fig. 2**

**Fig. 3**

**Fig. 4**

**Fig. 5**

Fig. 6

**Fig. 7A**

**Fig. 7B**

**Fig. 8**

**Fig. 9A**

st4
t4
230
900A
b1 b2 b3 *b4* b5 b6 b7 b8 b9 b10 b11 b12 b13 b14 b15 b16
200-i
200-ii
220

**Fig. 9B**

230
900B
t12
b1 b2 b3 *b4* b5 b6 b7 b8 b9 b10 b11 *b12* b13 b14 b15 b16
200-i
200-ii
220

Fig. 10A

Fig. 10B

1100

obtaining a magnitude of a frequency spectrum of a receive signal of the radar sensor, wherein the frequency spectrum comprises a first portion and a second portion within a frequency bandwidth divided into bins, wherein the first and second portions are symmetrically positioned with respect to a center frequency

1110

for at least one bin in the first portion, determining a bin threshold based on the magnitude of the frequency spectrum within one or more bins in the second portion

1120A

for at least one bin in the second portion, determining a bin threshold based on the magnitude of the frequency spectrum within one or more bins in the first portion

1120B

detecting the target motion in response to the magnitude of the frequency spectrum exceeding the bin threshold in at least one bin within the frequency bandwidth

1130

**Fig. 11**

Europäisches
Patentamt

European
Patent Office

Office européen
des brevets

# EUROPEAN SEARCH REPORT

Application Number

**EP 23 19 2455**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 225 864 A (LILLINGTON JOHN) 30 September 1980 (1980-09-30) * claim 6; figures 1-3 * * column 1, lines 25-30 * * column 2, line 10 – column 3, line 65 *<br>----- | 1-15 | INV.<br>G01S13/56<br>G01S7/41<br>G01S7/288<br>G01S7/292<br>G01S7/35 |
| A | US 3 603 996 A (MURCHISON JERRE M ET AL) 7 September 1971 (1971-09-07) * figure 1 * * column 1, lines 1-35 * * column 1, line 61 – column 3, line 55 *<br>----- | 1-15 | G01S13/34<br>G01S13/52<br>G01S13/58<br>G01S13/524<br>G01S13/526 |

TECHNICAL FIELDS
SEARCHED      (IPC)

G01S

The present search report has been drawn up for all claims

| Place of search | Date of completion of the search | Examiner |
|---|---|---|
| Munich | 25 January 2024 | Rodríguez González |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 2455

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2024

| Patent document cited in search report | | Publication date | Patent family member(s) | | Publication date |
|---|---|---|---|---|---|
| US 4225864 | A | 30-09-1980 | FR | 2389905 A1 | 01-12-1978 |
| | | | GB | 1598437 A | 23-09-1981 |
| | | | US | 4225864 A | 30-09-1980 |
| US 3603996 | A | 07-09-1971 | NONE | | |

EPO FORM P0459

For more details about this annex : see Official Journal of the European Patent Office, No. 12/82